# EUROPEAN PATENT APPLICATION

(11) **EP 4 589 859 A1**
(43) Date of publication of application: **23.07.2025**
(21) Application number: 24152227.5
(22) Date of filing: 16.01.2024
(51) Int. Cl.: H04B 7/06

(54) **USER EQUIPMENT AND BASE STATION INVOLVED IN CONFIGURATION PROCEDURE**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a user equipment comprising the following. A receiver receives configuration information for each of at least one mobility candidate cell, the configuration information configuring:
• a first list of one or more beam indicators, the first list being usable by the UE for preprocessing of signals from the respective mobility candidate cell when located in a serving cell of the UE before a mobility cell switch to the respective mobility candidate cell,
• a second list of one or more beam indicators, the second list being usable by the UE for one or more of signal transmission and signal reception when located in the respective mobility candidate cell after a mobility cell switch.

At least a part of the first list is also usable by the UE for one or more of the signal transmission and signal reception after the mobility cell switch.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates a user equipment to perform improved TCI State configuration procedures.

In an embodiment, the techniques disclosed here feature a user equipment comprising the following. A receiver of the UE receives configuration information for each of at least one mobility candidate cell, the configuration information configuring:
- a first list of one or more beam indicators, the first list being usable by the UE for pre-processing of signals from the respective mobility candidate cell when located in a serving cell of the UE before a mobility cell switch to the respective mobility candidate cell,
- a second list of one or more beam indicators, the second list being usable by the UE for one or more of signal transmission and signal reception when located in the respective mobility candidate cell after a mobility cell switch.

At least a part of the first list of beam indicators is also usable by the UE for one or more of the signal transmission and the signal reception when located in the respective mobility candidate cell after the mobility cell switch.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates a split-gNB architecture, where a gNB is split into a gNB-central unit and one or more gNB-distributed units,
- **Fig. 7**: illustrates a simplified and exemplary implementation of a set of synchronization signal blocks distributed in a half-frame,
- **Fig. 8**: illustrates several beams and the corresponding SSB index, SSB1-SSB8, and how the beams are transmitted by the gNB in a beam-sweeping manner,
- **Fig. 9**: illustrates a simplified signaling diagram for an intra-DU lower-layer cell switch,
- **Fig. 10**: illustrates the relationship between the information elements for DL and joint TCI States and UL TCI States,
- **Fig. 11**: illustrates the relationship of some configurations for two LTM candidate cells 1 and 2,
- **Fig. 12**: illustrates an exemplary and simplified structure of a UE and a gNB,
- **Fig. 13**: illustrates a structure of the UE according to an exemplary implementation of the improved TCI State configuration procedure,
- **Fig. 14**: illustrates a flow diagram for the UE behavior according to an exemplary implementation of the improved TCI State configuration procedure,
- **Fig. 15**: illustrates a structure of the base station according to an exemplary implementation of the improved TCI State configuration procedure,
- **Fig. 16**: illustrates a flow diagram for the base station behavior according to an exemplary implementation of the improved TCI State configuration procedure,
- **Fig. 17**: is a signaling diagram illustrating an exemplary exchange between the UE and the gNB for an exemplary implementation of the improved TCI State configuration procedure,
- **Fig. 18**: illustrates an exemplary implementation of the first variant, including an illustration of the inside list of beam indicators, the outside list of beam indicators, and the resulting final list of finally configured beam indicators,
- **Fig. 19**: illustrates an exemplary implementation of a sub-variant of the first variant, including an illustration of the inside list of beam indicators, the outside list of beam indicators, and the resulting final list of finally configured beam indicators,
- **Fig. 20**: illustrates an exemplary implementation of the second variant, including an illustration of the inside list of beam indicators, the outside list of beam indicators, and the resulting final list of finally configured beam indicators,
- **Fig. 21**: illustrates an exemplary implementation of the third variant, including an illustration of the inside list of beam indicators, the outside list of beam indicators, and the resulting final list of finally configured beam indicators, and
- **Fig. 22**: illustrates a simplified and exemplary message exchange for an intra-DU lower-layer cell switch incorporating the improved TCI State configuration procedure.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

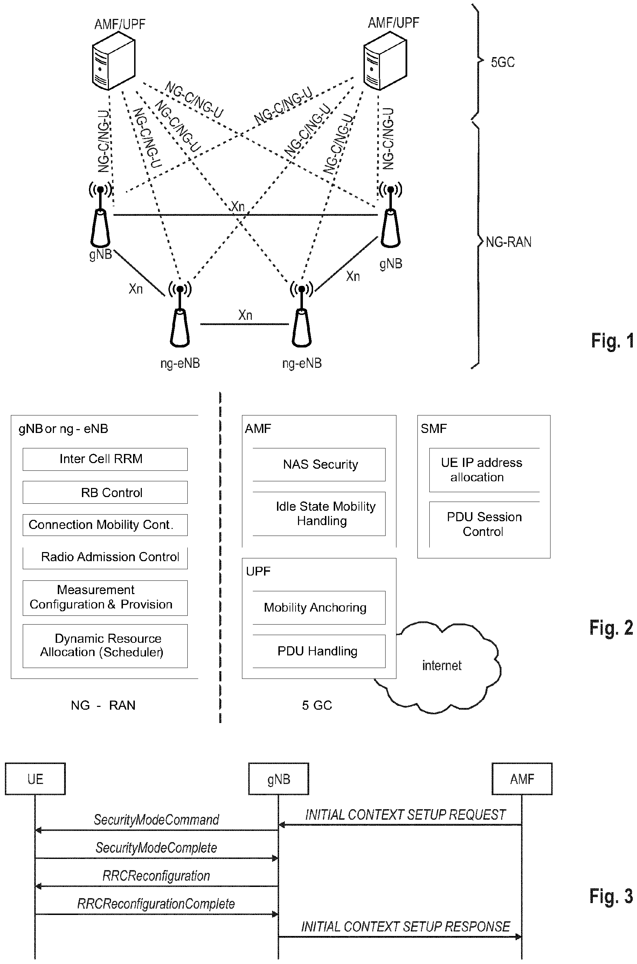

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in Fig. 1 (see e.g., 3GPP TS 38.300 e.g., v17.6.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.6.0, e.g., section 4; similarly v18.0.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

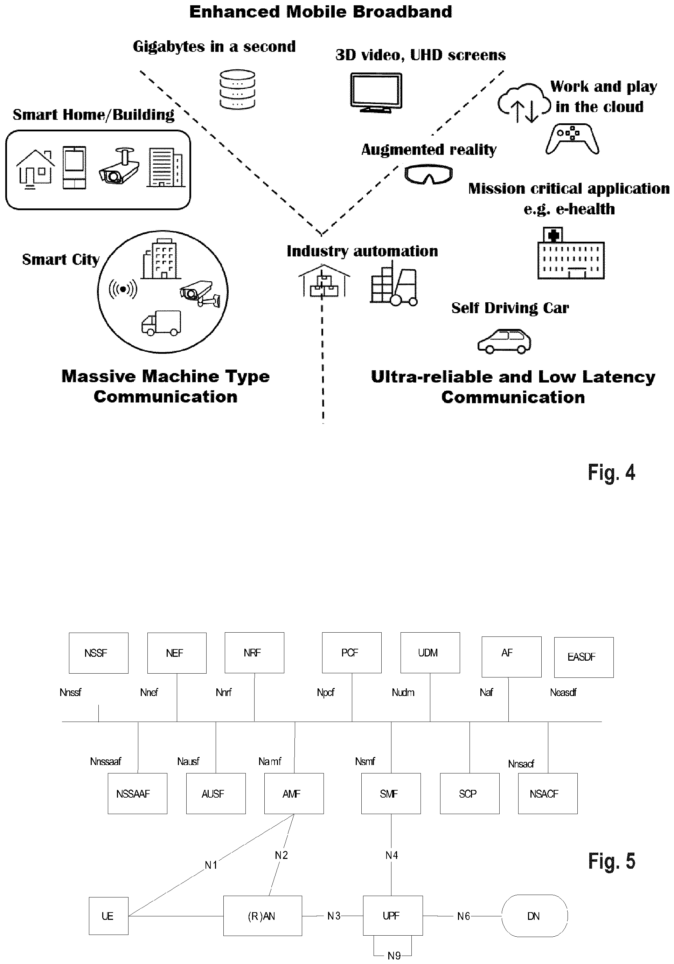

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v15.9.0, section 4.2.3, see also corresponding section in v17.11.0 or v18.4.0). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Split gNB architecture

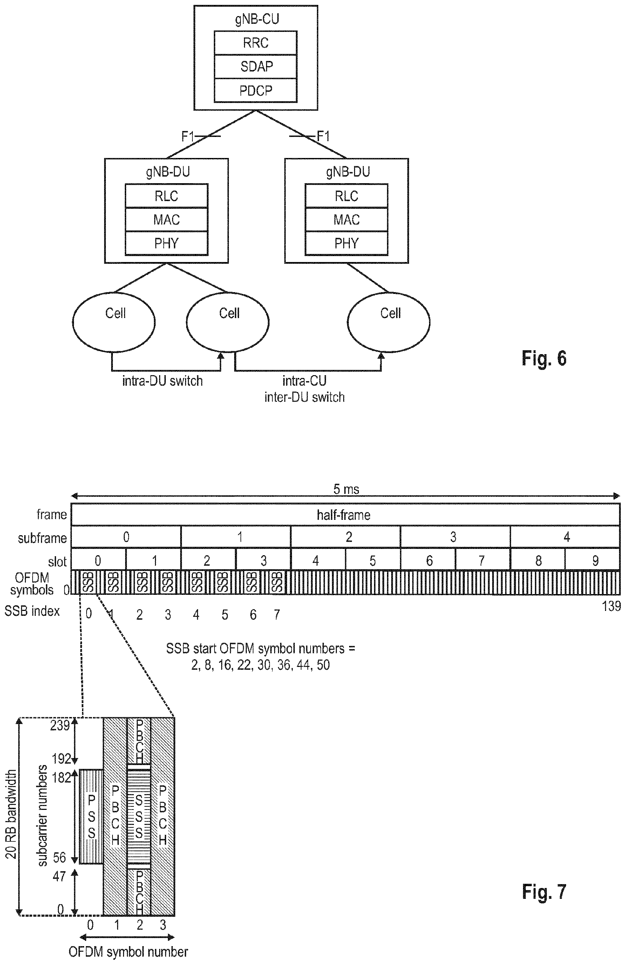

In the 3GPP standard, a gNB can be split into a gNB-CU (Central Unit) and one or more gNB-DUs (Distributed Units). This is illustrated in **Fig. 6**.

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SOAP layer need not be present if the CU is connected to a 4G Core network as there should be a 5G core network to support SOAP.

Therefore, the PHY and MAC layers are terminated at the gNB-DU, while Layer 3 (RRC) is terminated at the gNB-CU.

There is a single CU for each gNB, i.e. one gNB-DU is connected to only one gNB-CU. Alternatively, for resiliency, a gNB-DU may be connected to multiple gNB-CUs. One gNB-CU may control multiple gNB-DUs, for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1 and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v17.6.0, e.g. section 6.1. The F1 interface application protocol is specified in more detail e.g. in 3GPP TS 38.473 v17.6.0.

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also TS 38.211 v18.0.0 sections 7.4.2.2 and 7.4.2.3), including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in **Fig. 7**, which shows at the bottom part the PSS, SSS, and PBCH in the time and frequency domain.

The SSB set illustrated in Fig. 7 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

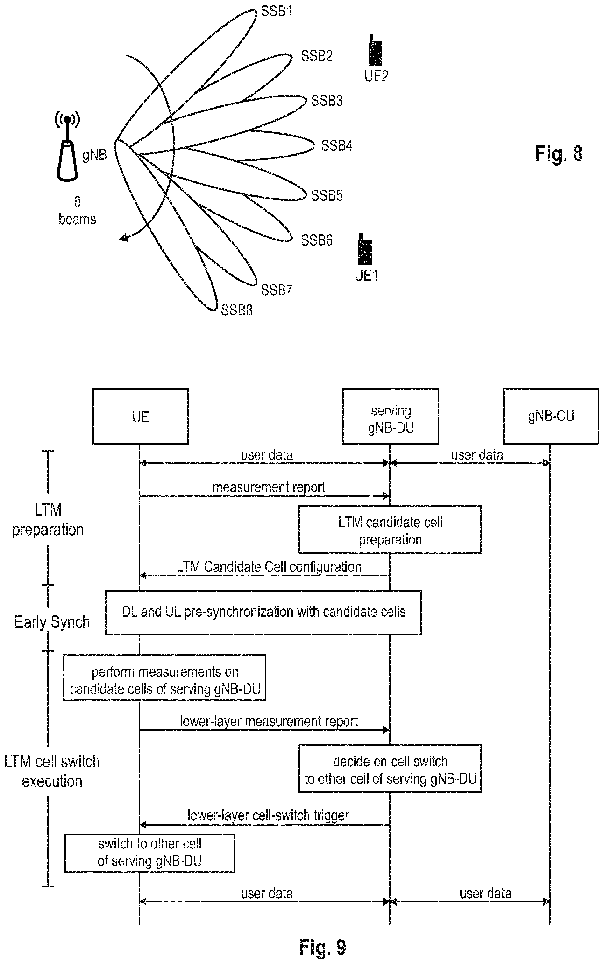

All the SSBs can be transmitted with all beams in the system. Alternatively, the SSBs can be transmitted in different beams, e.g. when SSB beamforming is enabled. In that case, each SSB is transmitted on a different spatial beam, as illustrated in **Fig. 8**. Similar to the exemplary assumption of Fig. 7, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Lower-layer-triggered mobility (LTM)

When the UE moves from the coverage area of one cell to another cell, at some point a serving-cell change needs to be performed. According to one exemplary possibility, a serving-cell change is triggered by L3 measurements and is done by RRC-signalling-triggered Reconfiguration with Synchronisation for a change of PCell and PSCell, as well as a release/add for SCells when applicable. Such a procedure may involve complete L2 (and L1) resets, leading to longer latency, larger overhead and longer interruption time than beam switch mobility.

In the ongoing 3GPP Rel. 18 work on mobility enhancements, supporting Layer-1-Layer-2-(also termed lower-layer) triggered mobility (LTM) is one of the topics. The UE is firstly configured by the RRC (L3) with a set of candidate cells. Then, L1- or L2 signaling (e.g. a MAC CE and/or possibly a DCI) is used to trigger the switch of the UE's serving cell among the candidate cells without a RRC reconfiguration. Recently, it was decided that a MAC CE will be used to trigger the switch, rather than a DCI. Put differently, to facilitate sequential cell switches, the cell switch shall be prepared in a manner that no RRC reconfiguration is needed for the UE after the cell switch, regardless of which candidate cell becomes the new serving cell. The goal is to reduce latency, overhead and interruption time for the serving-cell change.

For example, intra-DU and intra-CU inter-DU cells switches are both possible. **Fig. 6** illustrates the intra-DU switch between two cells of the same gNB-DU as well as the inter-DU switch between two cells of different gNB-DUs.

**Fig. 9** is a simplified and exemplary message exchange for an intra-DU lower-layer cell switch according to the ongoing 3GPP Rel. 18 work. Correspondingly, it is exemplary assumed that the gNB-DU controls a plurality of cells, including the current serving cell of the UE. The gNB-DU is in connection with a gNB-CU.

As apparent therefrom, the gNB-DU may identify suitable LTM candidate cells based on measurement reports transmitted by the UE. The gNB-DU prepares appropriate configurations for the identified LTM candidate cells and transmits the LTM candidate cell configurations for the identified LTM candidate cells to the UE.

3GPP Rel. 18 also facilitates an early synchronization (pre-synchronization) with the LTM candidate cells before even receiving a cell switch command.

The actual cell switch is decided by the gNB-DU based on lower-layer (e.g. Layer 1 RSRP) measurements performed at the UE and reported to the gNB-DU (see "lower-layer measurement report" in the figure). Exemplarily, the UE measures reference signals from one or more candidate cells of the gNB-DU and reports the results to the gNB-DU. The gNB-DU can use the received measurement results for determining whether to execute an LTM switch to a candidate target cell or not. The lower-layer cell-switch trigger, identifying one of the previously-configured candidate cells as the target cell, is transmitted to the UE. The UE performs the switch from the current cell to the indicated target cell of the gNB-DU and applies the cell configuration previously received from the gNB-DU for said target cell. After completing the switch to the target cell, the UE may proceed to exchange user data. The benefit achieved is the low latency.

As presented above, the lower-layer mobility procedure is based on the UE performing measurements and reporting the measurement results to the serving gNB (serving gNB-DU and/or serving gNB-CU) of the UE. To said end, the UE can be configured by its serving gNB with the necessary parameters and information.

In present 3GPP 5G systems, there are at least two types of reference signals that can be used for the measurements, the SSB (identified by an SSB-*Index*) and the CSI-RS (Channel State Information-Reference Signals). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery.

### Transmission Configuration Indicator (TCI) states

Beam management in 5G NR has been employing a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc.. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters and which two signals might share, including for instance:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

The TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field "*Transmission Configuration Indication*".
- Step 3: One out of the 8 activated TCI states is then actually used by the UE to receive a target channel/signal. For example, the UE receives a DCI signal, which indicates one of the codepoints in the DCI field "*Transmission Configuration Indication*". The UE applies the indicated codepoint to the target channel(s) or target signal(s).

### Configuration of TCI states (TCI Configuration)

According to one exemplary implementation (see e.g. 3GPP TS 38.214, v17.7.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v17.7.0, section 6.3.2, associates one or two DL reference signals (here SSB and/or CSI-RS) with a corresponding quasi-colocation (QCL) type (for DL or joint DL/UL operation) as follows:

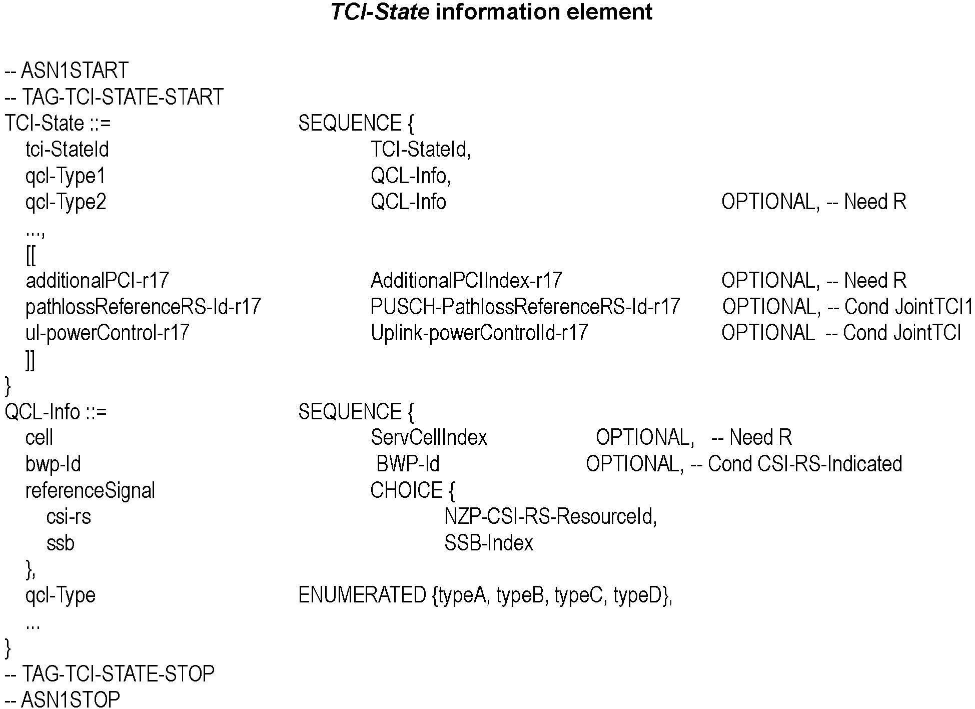

| ***QCL-Info* field descriptions** |
|---|
| ***bwp-Id*** |
| The DL BWP which the RS is located in. If the field is absent, the RS is located in the DL BWP in which the *TCI-State* is applied by the UE. |
| ***cell*** |
| The UE's serving cell in which the *reference Signal* is configured. If the field is absent, the *reference Signal* is configured in the serving cell in which the *TCI-State* is applied by the UE. The RS |
| can be located on a serving cell other than the serving cell for which the *TCI-State* is applied by the UE only if the *qcl-Type* is configured as *typeC* or *typeD.* If the *reference Signal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| ***TCI-State* field descriptions** |
|---|
| ***additionalPCI*** |
| Indicates the physical cell IDs (PCI) of the SSBs when *reference Signal* is configured as SSB for both QCL-Type1 and QCL-Type2. In case the cell is present, the *additionalPCI* refers to a PCI value configured in the list configured using *additionalPCI-ToAddModList* in the serving cell indicated by the field cell. Otherwise, it refers to a PCI value configured in a list *additionalPCI- ToAddModList* configured in the serving cell where the *TCI-State* is applied by the UE. When this field is present the *cell* for *qcl-Type1* and *qcl-Type2* is configured with same value, if present. |
| ***pathlossReferenceRS-Id*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-Stateld*** |
| ID number of the TCI state. |
| ***ul-PowerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured. |

| **Conditional Presence** | **Explanation** |
|---|---|
| *CSI-RS-Indicated* | This field is mandatory present if *csi-rs* is included and *unifiedTCI-StateType* is not configured. This field is optionally present, Need R, if *csi-rs* is included and *unifiedTCI-StateType* is configured. Otherwise, it is absent, Need R. |
| *JointTCI* | This field is optionally present, Need R, if this serving cell is configured with *unifiedTCI-StateType* set to *'joint'.* It is absent, Need R, otherwise. |
| *JointTCI1* | This field is mandatory present, if this serving cell is configured with unifiedTCI-StateType set to 'joint'. It is absent, Need R, otherwise. |

For the uplink, the following information element *TCI-UL-State* is defined in 3GPP TS 38.331, section 6.3.2:
The IE *TCI-UL-State* indicates the TCI state information for UL transmission.

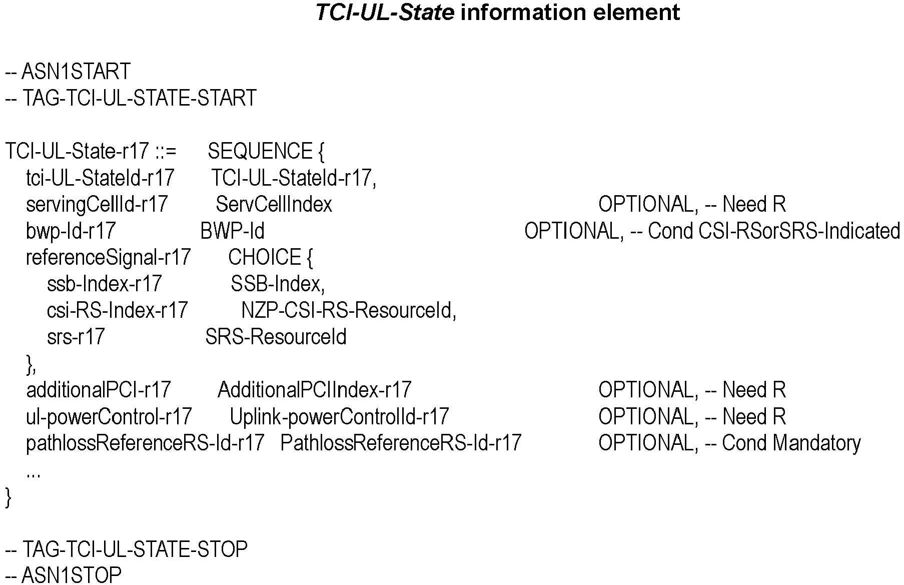

| ***TCI-UL-State* field descriptions** |
|---|
| ***additionalPCI*** |
| Indicates the physical cell IDs (PCI) of the SSBs when *reference Signal* is configured as SSB. In case the *servingCellId* is present, the *additionalPCI* refers to a PCI value configured in the list configured using *additionalPCI-ToAddModList* in the serving cell indicated by the field *servingCellId.* Otherwise, it refers to a PCI value configured in the list configured using *additionalPCI-ToAddModList* in the serving cell where the *ul-TCI-StateList* is applied by the UE. |
| ***bwp-Id*** |
| The DL BWP which the CSI-RS is located in or UL BWP where the SRS is located in. |
| ***servingCellId*** |
| The UE's serving cell in which the *reference Signal* is configured. If the field is absent, the *reference Signal* is configured in the serving cell in which the *TCI-UL-State* is applied by the UE. |
| ***pathlossReferenceRS-ld*** |
| The ID of the reference Signal (e.g. a CSI-RS or a SS block) used for PUSCH, PUCCH and SRS path loss estimation. This field refers to an element in the list configured using *pathlossReferenceRSToAddModList* in the serving cell and UL BWP where the UL TCI State is applied by the UE. |
| ***ul-powerControl*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *ul-TCI-ToAddModList* is configured. |

| **Conditional Presence** | **Explanation** |
|---|---|
| *CSI-RSorSRS-Indicated* | This field is mandatory present if *reference Signal* is set to *csi-RS-index* or to srs, absent otherwise |
| *Mandatory* | The field is mandatory present. |

The list of TCI States can be configured to the UE as follows. The *dl-OrJointTCI-State-ToAddModList-r17* can be used for creating a list of TCI States for DL or joint DL/UL operation, and e.g. can be part of the *PDSCH-Config* IE (which in turn e.g. can be part of the IE *BWP-DownlinkDedicated).*

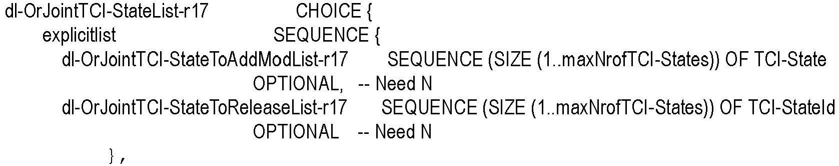

The below indicated *ul-TCI-ToAddModList-r17* can be used for creating a list of ULTCI states for uplink operation and e.g. can be part of the IE *BWP-UplinkDedicated*:

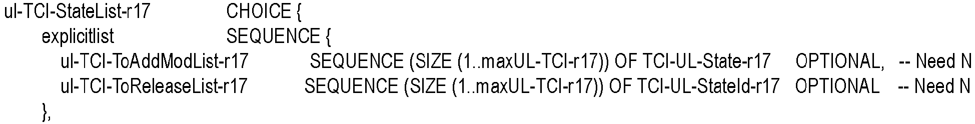

The lEs *BWP-DownlinkDedicated* and *BWP-UplinkDedicated* can be respectively part of the *ServingCellConfig* information element (see also TS 38.331, section 6.3.2), which can be used to configure (or modify) the UE with a serving cell and which includes parameters for communication within the serving cell, such as one or more frequency bandwidth parts, time division configuration, measurement configuration, etc. (see e.g. definition of the *ServingCellConfig* IE in TS 38.331).

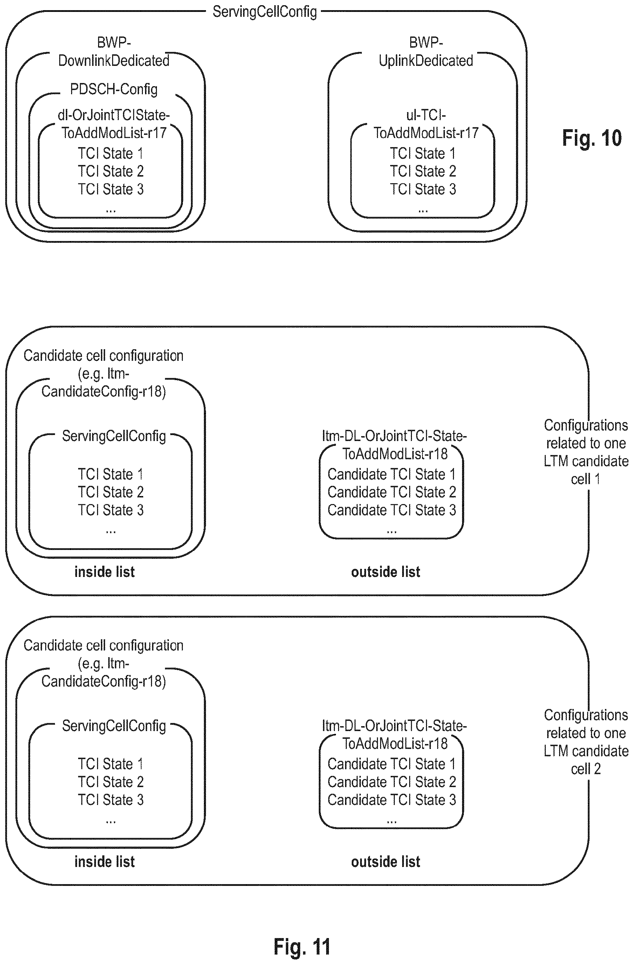

**Fig. 10** illustrates the relationship of the above-mentioned informationelements, wherein each TCI state in the list of *dl-OrJointTCI-State-ToAddModList-r17* is defined by the IE *TCI-State* (e.g. of TS 38.331 v17.7.0) shown above, and wherein the TCI state in the list of *ul-TCI-ToAddModList-r17* is defined by the IE *TCI-UL-State* (e.g. of TS 38.331 v17.7.0).

### Activation of TCI states (TCI Activation)

According to the following exemplary implementation (see e.g. 3GPP TS 38.321 v17.6.0), the UE receives an activation command for activating a subset of TCI states. Different MAC CE messages are described in clauses of 3GPP TS 38.321 for the TCI State activation/deactivation, such as in section 6.1.3.14 for a UE-specific PDSCH MAC CE, in section 6.1.3.15 for a UE-specific PDCCH MAC CE, and in section 6.1.3.47 for a Unified TCI state activation/ deactivation.

In particular, the field Serving Cell ID indicates the identity of the Serving Cell for which the MAC CE applies, the fields DL BWP ID and UL BWP IB respectively indicate a DL or UL bandwidth part (BWP) for which the MAC CE applies, the fields Pᵢ indicate whether the ith TCI codepoint has multiple TCI states or single TCI state, the fields D/U indicate whether the TCI state ID in the same octet is forjoint/downlink or uplink TCI state, and the fields TCI state ID indicates the identified TCI state (to be activated).

In accordance with the received MAC CE message, the UE activates a subset of up to 8 TCI states and/or pairs of TCI states, with one TCI state for DL channels/signals and/or one TCI state for UL channels/signals and maps the activated TCI states to the codepoints of the DCI field *'Transmission Configuration Indication'.*

In one example, for each of the activated TCI states in the subset, the UE can perform tracking (see e.g. parameter "tci-StatePDSCH" in TS 38.306, V17.6.0). This for instance means that a UE performs measurements of the reference signals (e.g. SSB, or CSI-RS) associated with the corresponding active TCI states and updates its reception coefficients and/or transmission coefficients corresponding to the active TCI states. In other words, the UE prepares the necessary reception and/or transmission parameters corresponding to the active TCI states in order to shorten the beam (or TCI state) application time once the beam (or TCI state) is selected for transmission/reception by the gNB. Depending on the measurement and reporting configuration, the UE may report these measurements to the network (e.g. the serving gNB or the serving gNB-DU). Based on the received measurements, the network can then e.g. decide a suitable downlink Tx beam to the UE and/or a suitable uplink Tx beam from the UE.

The measurement and reporting can be e.g. based on the CSI (Channel State Information) reporting framework, which generally can be considered to involve two parts, one for configuration and another one for the triggering of the CSI reporting. Measurement and reporting can be carried out on a periodic, semi-periodic or aperiodic basis.

As of 3GPP Release 17, there are two types of beam management (BM) supported, namely intra-cell beam management and inter-cell beam management. For intra-cell BM, all activated TCI states have source RS(s) in the serving cell serving the UE. For inter-cell BM, the activated TCI states can also have TCI states associated with a source reference signal (RS) in a non-serving cell, not serving the UE. Accordingly, inter-cell BM allows the UE to apply the parameters of a TCI state associated with a source RS (or in other words use a beam indicated by the TCI state) of a non-serving cell for receiving a target channel from the non-serving cell or transmitting a target channel to the non-serving cell without changing the serving cell (performing a cell switch). In order to support inter-cell BM, the parameter "ServingAddtionaIPCllndex-r17" in the IE *TCI-State,* described above, provides the non-serving cell IDs to the SSB(s) associated with the configured TCI state. Details can be found in TS 38.331.

### Indication of TCI states (TCI Indication)

According to the following exemplary implementation (see e.g. TS 38.212 v17.6.0 and also v18.0.0), at least one out of the previously activated TCI states is then indicated to be used by the UE to receive or transmit a target channel/signal. For instance, in DCI format 1-1 (section 7.3.1.2.2 of 3GPP TS 38.212) and in DCI format 1-2 (section 7.3.1.2.3 of 3GPP TS 38.212), which can be used for PDSCH scheduling, there is included a field called "transmission configuration indication (TCI)" that is used to indicate one of the eight activated TCI states by using 3 bits, if configured. For example, the DCI can indicate one joint TCI State applied jointly for DL and UL, or for example the DCI can indicate a pair of TCI States, one DL TCI state and one UL TCI State separately. Notably, DCI format 1-1 or 1-2 used to indicate TCI can also be sent with or without scheduling any PDSCH.

The UE may apply the parameters of the indicated TCI state to the reception of downlink data. In other words, the UE uses the beam related to the one or more reference signals of the indicated TCI state for the reception of a downlink target channel (and/or for the transmission of an uplink target channel). For example, the UE applies the parameters of the indicated TCI state and transmits (or receives) a target channel with the same spatial filter as the reference signal indicated by the TCI state.

### 3GPP Release 18 mobility enhancements

In the ongoing 3GPP Rel.18 work on mobility enhancements, supporting LTM (L1, L2 triggered mobility) is one of the objectives (see above section "Lower-layer-triggered mobility (LTM)"). In brief, the UE is firstly configured by RRC with a set of candidate cells. Then, e.g. a MAC CE is used to switch UE's service cell among the previously-configured candidate cells without RRC reconfiguration. The goal is to reduce latency, overhead and interruption time for the serving-cell change.

For each of the LTM candidate cells, the UE can be configured with a list of LTM TCI states (called e.g. candidate TCI states), with the purpose of allowing the UE to perform pre-synchronization before the actual cell switch (see "Early Synch" in Fig. 9). In one example, the UE does not need to process all the candidate TCI states of the list for the pre-synchronization, but only a sub-set of the candidate TCI states that can be activated by use of a suitable activation message from the gNB (such as a MAC CE).

This pre-synchronization facilitates to reduce the beam switching time and thus the cell-switching time. For instance, the pre-synchronization might involve that the UE tracks multiple beams from the candidate cells (using the corresponding reference signals), including timing and/or frequency tracking. For example, the UE may perform early Timing Advance acquisition with the candidate cells before the actual cell switch.

One further development in the 3GPP standardization is that for a given LTM candidate cell, two separate lists of TCI states would be configured.
- Inside list: This inside list would be configured inside the candidate cell configuration (e.g. inside the *ServingCellConfig* IE of the candidate cell configuration) and would be intended for beam management after the cell switch (e.g. when the candidate cell becomes the new serving cell of the UE). This inside list would e.g. comprise the IE *TCI-State* as defined above.
- Outside list: This outside list would be configured outside the candidate cell configuration (e.g. outside the *ServingCellConfig* IE of the candidate cell configuration) and would be intended for the above-mentioned pre-synchronization before the cell switch. This outside list would e.g. comprise the IE *Candidate TCI-State.*

**Fig. 11** illustrates the relationship of some configurations for two LTM candidate cells 1 and 2.

The following exemplary and preliminary definitions for an *LTM-Candidate* information element, a *Candidate TCI-State* information element and an *CandidateTCl-UL-State* information element are currently discussed for the 3GPP standard TS 38.331 of Release 18.

### - LTM-Candidate

The IE *LTM-Candidate* concerns a LTM candidate configuration to add or modify.

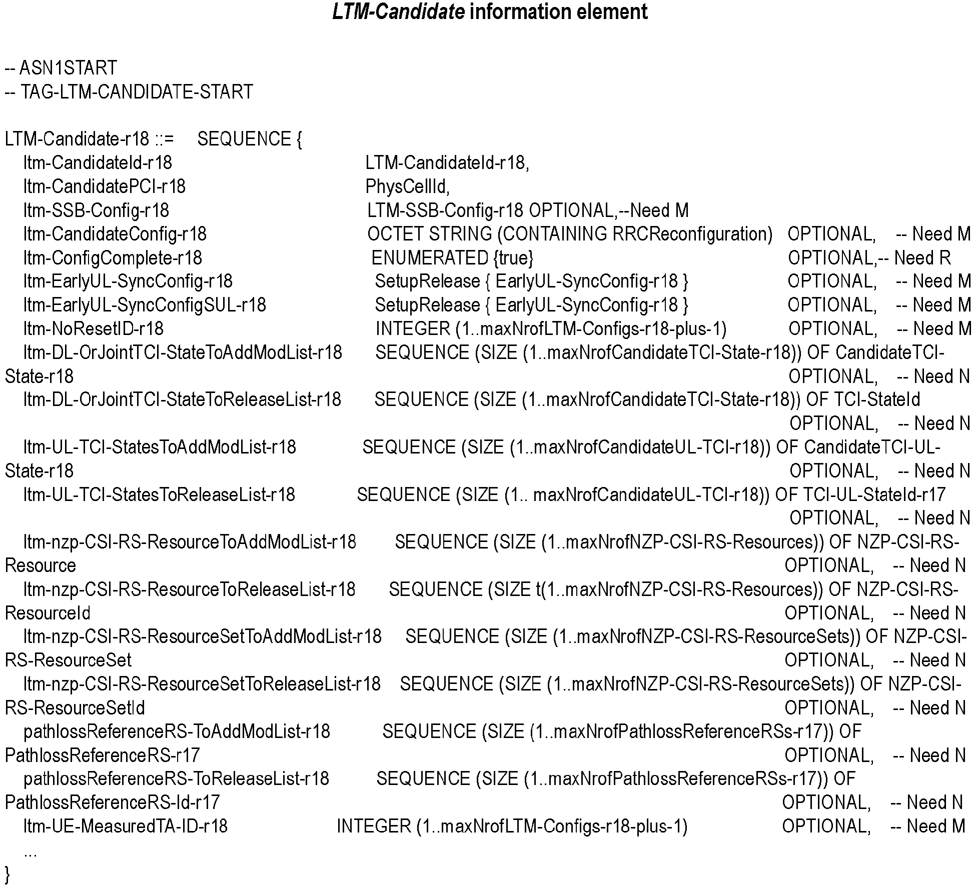

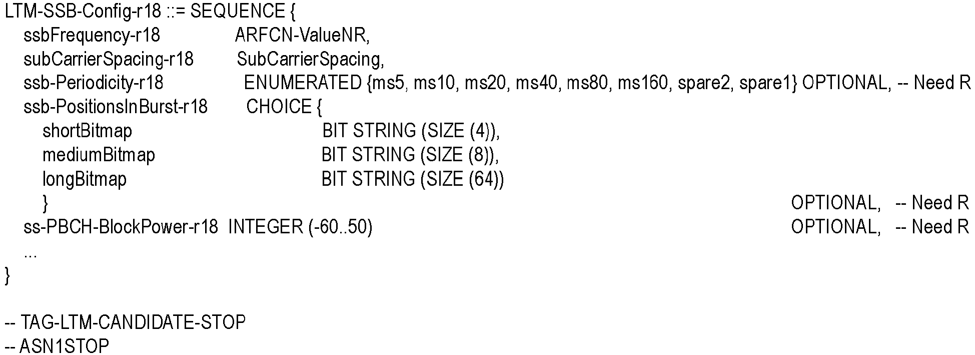

| ***LTM-Candidate* field descriptions** |
|---|
| ***ltm-Candidateld*** |
| This field indicates an LTM candidate configuration. |
| ***ltm-CandidateConfig*** |
| This field includes an RRCReconfiguration message used to configure an LTM candidate cell. |
| ***ltm-CandidatePCI*** |
| This field identifies the PCI of the SpCell of the configuration contained in *Itm-CandidateConfig.* |
| ***ltm-ConfigComplete*** |
| This field indicates whether the LTM candidate configuration within *ltm-CandidateConfig* is a complete configuration. |
| ***ltm-DL-OrJointTCI-StateToAddModList*** |
| A list of TCI states for LTM to add and/or modify. |
| ***ltm-DL-OrJointTCI-StateToRe*/*easeList*** |
| A list of TCI states for LTM to remove. |
| ***ltm-EarlyUL-SyncConfig, Itm-EarlyUL-SyncConfigSUL*** |
| A configuration used to perform the early UL synchronization procedure over an UL or SUL carrier. |
| ***ltm-nzp-CSI-RS-ResourceToAddModList*** |
| A list of nzp-CSI-RS-Resources for LTM to add and/or modify. |
| ***ltm-nzp-CSI-RS-ResourceToReleaseList*** |
| A list of nzp-CSI-RS-Resources for LTM to remove. |
| ***ltm-nzp-CSI-RS-ResourceSetToAddModList*** |
| A list of nzp-CSI-RS-Resources set for LTM to add and/or modify. |
| ***ltm-nzp-CSI-RS-ResourceSetToReleaseList*** |
| A list of nzp-CSI-RS-Resources set for LTM to remove. |
| ***ltm-UL-TCI-StatesToAddModList*** |
| A list of uplink TCI states for LTM to add and/or modify. |
| ***ltm-UL-TCI-StatesToReleaseList*** |
| A list of uplink TCI states for LTM to remove. |
| ***ltm-SSB-Config*** |
| This field indicates the configuration of SS/PBCH blocks to be used for L1 measurements configured with *ltm-CSI-ReportConfigToAddModList* in *CSI-MeasConfig* and for TCI states configured in other fields in *LTM-Candidate.* |
| ***ltm-UE-MeasuredTA-ID*** |
| This field indicates whether the UE should perform UE-based TA measurements towards an LTM candidate. |
| ***pathlossReferenceRS-ToAddModList*** |
| A list of Reference Signals to be used for path loss estimation for unified TCI state for LTM to add and/or modify. |
| ***pathlossReferenceRS-ToReleaseList*** |
| A list of Reference Signals to be used for path loss estimation for unified TCI state for LTM to add and/or modify. |

| ***LTM-SSB-Config field descriptions*** |
|---|
| ***ssb-PositionsInBurst*** |
| Indicates the time domain positions of the transmitted SS-blocks in a half frame with SS/PBCH blocks as defined in TS 38.213. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. |
| ***ssbFrequency*** |
| Indicates the frequency of the SS/PBCH block associated with the LTM candidate cell. |
| ***ssb-Periodicity*** |
| Indicates the periodicity of the SS/PBCH block. |
| ***ss-PBCH-BlockPower*** |
| Indicates the average EPRE of the resources elements that carry secondary synchronization signals in dBm that the network uses for SSB transmission on the LTM candidate cell. |
| ***subCarrierSpacing*** |
| Indicates the subcarrier spacing of the SSB. |

The field Itm-CandidateConfig-r18 inside the above IE *LTM-Candidate* would include the above noted inside list; more exemplarily within a corresponding *ServingCellConfig* information element that is part of the RRCReconfiguration message contained within the Itm-CandidateConfig-r18. On the other hand, the fields Itm-DL-OrJointTCI-StatetoAddModList-r18 and Itm-UL-TCI-StatesToAddModList-r18 (if present) would correspond to the above noted outside list.

Each of the Candidates TCI states of the outside list could be defined by the following *Candidate TCI-State* and *CandidateTCl-UL-State* information elements:

### - CandidateTCI-State

The IE *CandidateTCI-State* defines a TCI states configuration which associate one or more reference signal with a corresponding quasi-colocation (QCL) type.

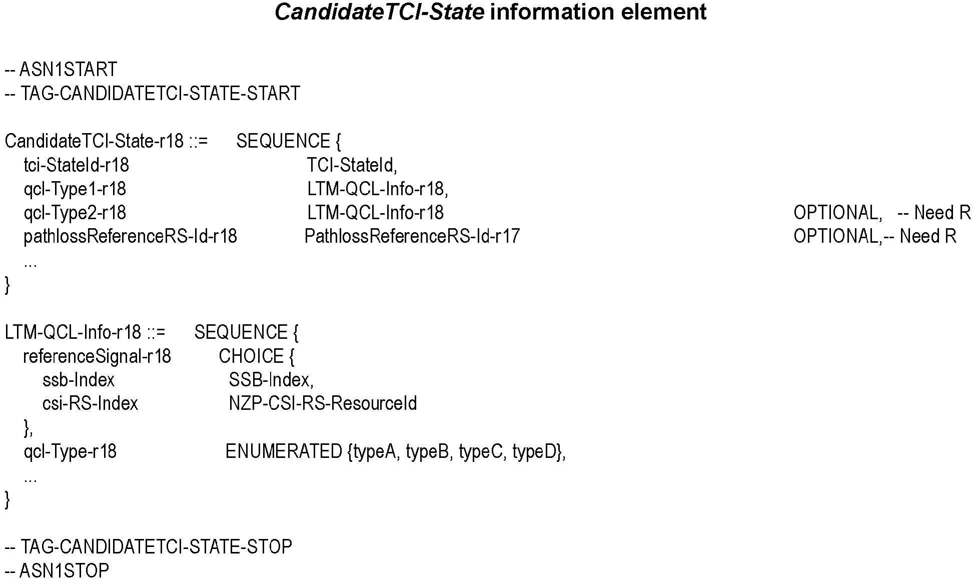

| ***CandidateTCI-State* field descriptions** |
|---|
| ***qcl-Type1, qcl-Type2*** |
| QCL information for the TCI state. |
| ***referenceSignal*** |
| Reference signal with which quasi-collocation information is provided. |
| ***tci-Stateld*** |
| The ID number of the TCI state. |

### - CandidateTCI-UL-State

The IE *CandidateTCl-UL-State* defines an uplink TCI states configuration.

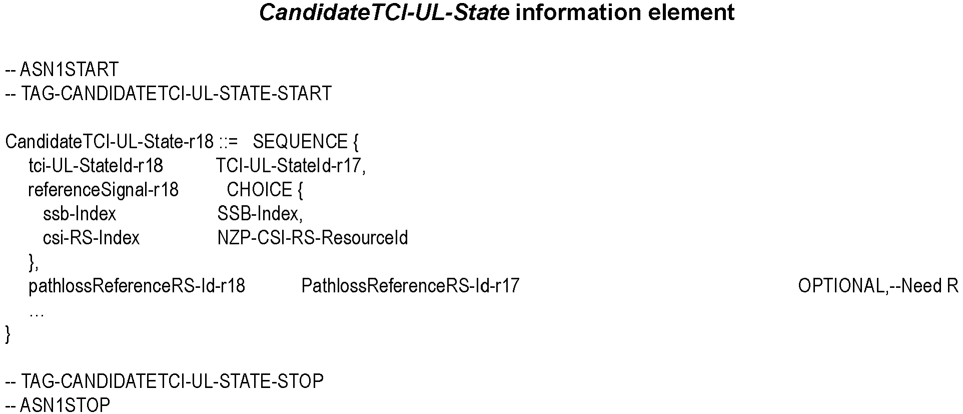

| ***CandidateTCI-UL-State* field descriptions** |
|---|
| ***referenceSignal*** |
| Reference signal with which quasi-collocation information is provided. |
| ***Tci-UL-StatelD*** |
| The ID number of the uplink TCI state. |

In order to avoid unnecessary processing at the UE, it is also possible that the UE will not process the candidate cell configuration, and thus will also not process the inside list of beam indicators inside the candidate cell configuration, before the cell switch (conversely after the cell switch the UE will process the candidate cell configuration). On the other hand, before the cell switch occurs and for facilitating the pre-synchronization and the related technical advantages, the outside list of TCI Statesis processed by the UE.

To facilitate the following discussion and description, the TCI state of the inside list can be called "BM TCI state", considering that it will be usable by the UE for beam management when being connected to the new cell after the cell switch. On the other hand, the TCI state of the inside list can be called "Candidate TCI state", in accordance with the new IE name given in the current 3GPP discussions.

### Further Improvements

As described above, in Rel. 18, in order to support mobility enhancements, Layer-1-Layer-2-(also termed lower-layer) triggered mobility (LTM) has been introduced, where L1- or L2 signalling (e.g. a MAC CE (and/or possibly a DCI) is used to trigger the switch of the UE's serving cell among candidate cells without RRC reconfiguration.

To said end, a configuration for the candidate cell(s) is provided by the gNB in advance to the UE, this candidate cell configuration comprising a list of TCI states to be used after cell switch e.g. for beam management (inside list). For further reducing the cell-switch latency by performing a pre-synchronization, it has been agreed that the UE can be configured by higher-layer signalling (e.g. RRC signalling) with a list of Candidate TCI states having source RS in the candidate cell(s) (outside list).

Consequently, two lists of TCI states for each LTM candidate are configured in parallel for a UE.

The Candidate TCI state of the outside list can be a subset of the BM TCI state of the inside list, in term of TCI State ID space, such that there may be overlapping TCI states (with same IDs in the inside and outside lists). It should be further noted that the same TCI states (e.g. with same TCI state IDs) of the inside list and outside list may possibly share some (and possibly all) fields. For instance, for one candidate cell, the configuration of an LTM TCI state (Candidate TCI State) in Itm-DL-Or JointTCI-StateToAddModList-r18 and ltm-ul-TCI-ToAddModList-r18 can be the same as its counterpart in dl-Or JointTCI-StateList-r17 and ul-TCI-ToAddModList-r17 of the first active BWP in the *ServingCellConfig* IE, at least in terms of TCI state ID, the corresponding qcl-Type1 and qcl-Type2 for the DL or joint TCI state or referenceSignal for the UL TCI state. Further, the LTM TCI state(s) in Itm-DL-Or JointTCI-StateToAddModList-r18 and Itm-ul- TCI- ToAddModList-r18 of a candidate cell is a subset of serving cell TCI state(s) in dl-OrJointTCI-StateList-r17 and ul-TCI-ToAddModList-r17 of the same cell.

The provision of the two lists of TCI States increases the signaling from the gNB to the UE and increases redundancy. For example, if a same TCI State (e.g. same ID) with a partially common configuration of the fields is used for both LTM pre-synchronization and BM, then the common fields need to be signalled in both lists, causing unnecessary signaling redundancy. As a possible further disadvantage, the UE may be required to perform a consistency checking for the common fields so as to determine whether the common fields indicate the same value in both lists; if different, the UE may then need to determine which value should be kept, or whether a configuration should be dropped. This may increase UE complexity.

The inventors thus identified the possibility to define an improved configuration of TCI states for facilitating to avoid one or more of the above described disadvantages. The present invention relates to different solutions and variants for such an improved TCI state configuration procedure.

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression "**beam indicator**" can be broadly understood e.g. as an indicator of a beam transmitted by a base station in a cell, e.g. a non-serving cell. In one example, the indicated beam can have a quasi co-location with another signal, to be received or transmitted by a UE. The beam indicator can be defined for use with a downlink signal, for use with an uplink signal or for joint use with both a downlink and uplink signal. The thus-indicated beam can be used by the UE for receiving or transmitting the target channel by exploiting quasi co-location characteristic(s). According to one example, the beam indicator is a TCI State or Candidate TCI State according to a 3GPP telecommunication standard, such as TS 38.331, e.g. as discussed above. In the following discussion of the improved configuration procedures and their variants, the expressions "TCI State" and "beam indicator" are equally used.

The expression "**pre-processing of signals**" can be broadly understood as referring to a processing of signals related to a mobility candidate cell, wherein the processing is performed before switching to that mobility candidate cell. In one example, the pre-processing comprises the reception of a reference signal (such as SSB, CSI-RS) that belongs to the mobility candidate cell while the UE is still connected to its current serving cell. Such pre-processing for example does not necessarily include the processing of user data signals from the mobility candidate cell (just the reference signals), because one purpose of such a pre-processing is to facilitate establishing an early (frequency/time) tracking of a beam of the mobility candidate cell (reference signal) and to thus reduce the beam switching time when the actual cell switch is performed. Other exemplary expressions are "pre-synchronization" or "early synchronization".

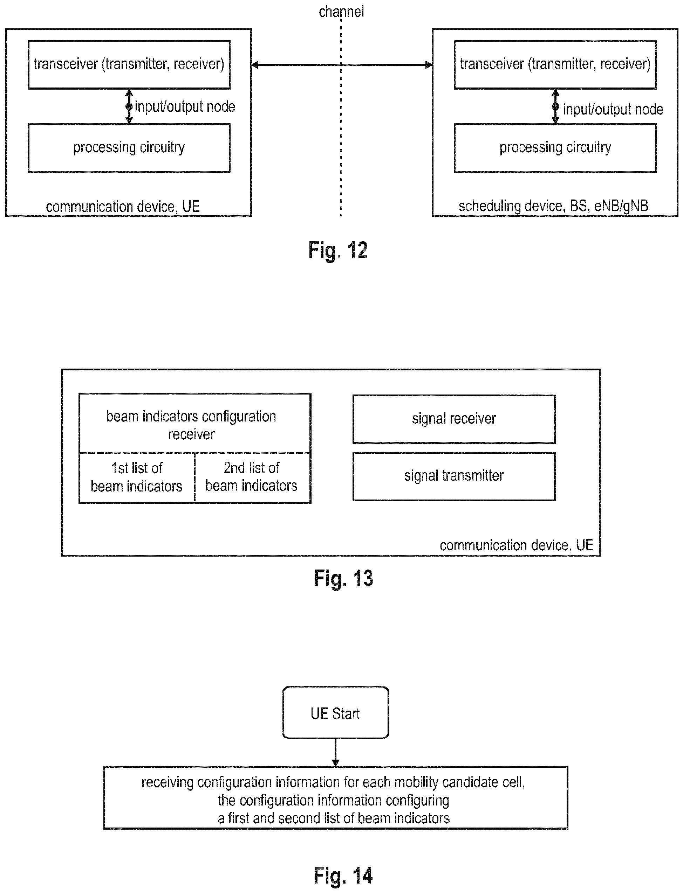

**Fig. 12** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present invention relates to different solutions (and respective variants) of an improved procedure for configuring beam indicators for further use by the UE, in short TCI state configuration procedure.

In connection with these solutions, improved UEs, improved base stations and improved integrated circuits are presented, which participate separately or together in the improved TCI State configuration procedures. Corresponding methods for the UE behavior and the base station behavior are provided as well. The integrated circuits may correspond to the UE and base station, and respectively their behavior.

**Fig. 13** illustrates a simplified and exemplary UE structure according to a basic implementation of the improved TCI state configuration procedure presented in more detail below. In one example, the UE structure can be implemented based on the general UE structure explained in connection with Fig. 12. The various structural elements of the UE illustrated in said Fig. 13 can be interconnected between one another e.g., with corresponding input/output nodes (not shown) e.g., in order to exchange control and user data and other signals. Although not shown for illustration purposes, the UE may include further structural elements.

As apparent from Fig. 13, the UE may include a beam indicators configuration receiver, a signal receiver and a signal transmitter. In the present case as will become apparent from the below disclosure, the receiver of the UE can thus be exemplarily configured to at least partly perform one or more of receiving the configuration information for configuring first and second lists of beam indicators and of receiving a signal, etc.

In the present case as will become apparent from the below disclosure, the processing circuitry of the UE can thus be exemplarily configured to at least partly perform one or more of using the configured first and second lists of beam indicators for generating a final configuration of beam indicators that can then be further used by the UE, of generating a third list comprising the finally configured beam indicators, etc.

In the present case as will become apparent from the below disclosure, the transmitter of the UE can thus be exemplarily configured to at least partly perform one or more of transmitting an uplink signal, etc.

One exemplary procedure as will be disclosed in more detail further below is implemented by a UE that includes the following. A receiver of the UE receives configuration information for each of at least one mobility candidate cell, the configuration information configuring:
- a first list of one or more beam indicators, the first list being usable by the UE for pre-processing of signals from the respective mobility candidate cell when located in a serving cell of the UE before a mobility cell switch to the respective mobility candidate cell,
- a second list of one or more beam indicators, the second list being usable by the UE for one or more of signal transmission and signal reception when located in the respective mobility candidate cell after a mobility cell switch.

At least a part of the first list of beam indicators is also usable by the UE for one or more of the signal transmission and the signal reception when located in the respective mobility candidate cell after the mobility cell switch.

A corresponding exemplary method comprises the following steps performed by a UE:
receiving configuration information for each of at least one mobility candidate cell, the configuration information configuring:
   - a first list of one or more beam indicators, the first list being usable by the UE for pre-processing of signals from the respective mobility candidate cell when located in a serving cell of the UE before a mobility cell switch to the respective mobility candidate cell,
   - a second list of one or more beam indicators , the second list being usable by the UE for one or more of signal transmission and signal reception when located in the respective mobility candidate cell after a mobility cell switch, and
wherein at least a part of the first list of beam indicators is also usable by the UE for one or more of the signal transmission and the signal reception when located in the respective mobility candidate cell after the mobility cell switch.

A corresponding sequence diagram for an exemplary UE behaviour in line with the above-discussed UE and UE method is presented in **Fig. 14**.

The above-described improved procedure at the UE facilitates achieving the object and overcoming at least some of the drawbacks explained above. In particular, the improved TCI State configuration procedure facilitates that at least a part of the first list of beam indicators is also reusable by the UE for signal transmission and/or signal reception after the cell switch, e.g. not only usable for the pre-processing of signals from the respective mobility candidate cell before the cell switch. Put differently, by facilitating the re-use of at least part of the first list of beam indicators for processing purposes related to the second list of beam indicators, it is possible to reduce the content of the second list if necessary. This increases the flexibility for generating the first and second lists of beam indicators, because e.g. the base station can flexibly decide to leave out content from the second list if already present in the first list. For example, the second list of beam indicators does not need to comprise the at least part of the first list of beam indicators to be re-used, such that redundancy is avoided and the configuration information (specifically the second list) transmitted to the UE can be reduced. Furthermore, a possible consistency check would not be necessary, because redundant and possibly conflicting configurations can be avoided.

A prior art UE uses the two lists of beam indicators separately for the separate purposes before and after the cell switch; a re-use of at least part of the first list of beam indicators is neither possible nor intended, such that the configuration of the two lists has to strictly follow such a separation, resulting in the above-mentioned redundancy and increase in configuration signaling.

Some exemplary implementations of the improved TCI State configuration procedure also involve improved base stations. Correspondingly, the improved TCI State configuration procedure also provides improved base stations that participate therein, as will be explained in the following.

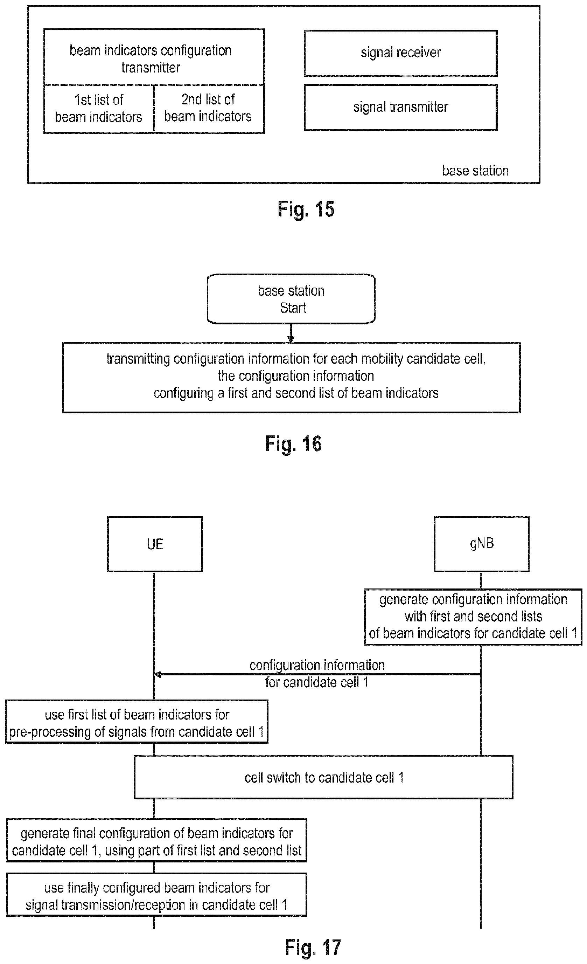

**Fig. 15** illustrates a simplified and exemplary base station structure according to an exemplary implementation of the improved TCI State configuration procedure, which can be implemented based on the general base station structure explained in connection with Fig. 12. The various structural elements of the base station illustrated in said Fig. 15 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a beam indicators configuration transmitter, a signal receiver and a signal transmitter. In the present case as will become apparent from the below disclosure, the transmitter of the base station can thus be exemplarily configured to at least partly perform one or more of transmitting the configuration information for configuring first and second lists of beam indicators and of transmitting a signal, etc.

In the present case as will become apparent from the below disclosure, the receiver of the base station can thus be exemplarily configured to at least partly perform one or more of receiving an uplink signal from the UE, etc.

In the present case as will become apparent from the below disclosure, the processing circuitry of the base station can thus be exemplarily configured to at least partly perform one or more of using the first and second lists of beam indicators and generating the configuration information for a mobility candidate cell, etc.

One exemplary procedure as will be disclosed in more detail further below is implemented by a base station that includes the following. A transmitter of the base station transmits, to a user equipment, UE, configuration information for each of at least one mobility candidate cell, the configuration information configuring:
- a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
- a second list of one or more beam indicators , the second list being usable by the UE for one or more of signal transmission and signal reception when located in the respective mobility candidate cell after a mobility cell switch of the UE.

At least a part of the first list of beam indicators is also usable by the UE for one or more of the signal transmission and signal reception when located in the respective mobility candidate cell after the mobility cell switch of the UE.

A corresponding method comprises the following steps performed by the base station:
transmitting, to a user equipment, UE, configuration information for each of at least one mobility candidate cell, the configuration information configuring:
- a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
- a second list of one or more beam indicators , the second list being usable by the UE for one or more of signal transmission and signal reception when located in the respective mobility candidate cell after a mobility cell switch of the UE.

At least a part of the first list of beam indicators is also usable by the UE for one or more of the signal transmission and signal reception when located in the respective mobility candidate cell after the mobility cell switch of the UE.

A corresponding sequence diagram for an exemplary base station behavior in line with the above-discussed base station and corresponding method is illustrated in **Fig. 16**. The sequence diagram illustrates an exemplary and simplified implementation of the above presented base station method.

Different and exemplary implementations of the improved TCI State configuration procedure are explained in the following. For the explanation of the different implementations, some exemplary and simplifying assumptions are made.

**Fig. 17** is a signaling diagram of an exemplary and simplified implementation of the improved TCI State configuration procedure, illustrating the exchange of messages between the different participating entities (here the UE and gNB) and the steps performed at these entities. The UE behaviour and gNB behaviour follow the above described UE and base station and the respective methods.

It is assumed that the UE is located in its current serving cell, controlled by the gNB. The gNB controls at least a further cell, which can be considered to be a candidate cell 1 for a possible mobility target for the UE.

Fig. 17 illustrates in particular that the base station (here e.g. a gNB) first generates and then transmits the configuration information for the candidate cell 1, including the first and second lists of beam indicators as presented above, to the UE.

As this stage, the configuration information for candidate cell 1 can be reduced by the base station compared to prior art solutions, if necessary, because that part of the first list that can be re-used can be left out of the second list of beam indicators. Thus, less configuration information needs to be transmitted to the UE, which facilitates achieving the above-mentioned advantages, such as reduced signalling and less redundancy.

The UE can use the first list for the pre-processing of signals (such as reference signals) from candidate cell 1, before switching to said candidate cell 1. By receiving and processing (reference) signals from the candidate cell in advance (e.g. before the cell switch), an early synchronization is achieved which facilitates reducing the necessary time to later complete the actual cell switch.

Fig. 17 also illustrates the actual cell switch to candidate cell 1, details of which will be described further below.

As further apparent from Fig. 17, after the cell switch to candidate cell 1, the UE uses at least a part of the first list of beam indicators as well as the second list of beam indicators to generate a final configuration of beam indicators. Then, after the cell switch, this final configuration of beam indicators can be used by the UE for signal transmission and/or signal reception at candidate cell 1, e.g. transmitting an uplink data channel (e.g. PUSCH) or receiving a downlink data channel (e.g. PDSCH). One exemplary implementation of generating a final configuration is generating a third list with the finally configured beam indicators.

So far, the improved TCI State configuration procedure was described generally as providing first and second lists of beam indicators. These beam indicators can be e.g. one of a downlink beam indicator usable for a downlink signal, an uplink beam indicator usable for an uplink signal, and a joint beam indicator usable for both uplink and downlink signals. According to an exemplary 3GPP-compliant implementation, the *ul-TCI-ToAddModList-r17* and *TCI-UL-State* can be used for creating a list of UL TCI states; regarding DL and joint, each TCI state in the list of *dl-OrJointTCI-State-ToAddModList-r17* is defined by the IE *TCI-State* (for details see above section "Configuration of TCI states (TCI Configuration)" and TS 38.331 v17.7.0).

As briefly mentioned above in connection with Fig. 17, the configuration information, particularly the second list of beam indicators, for candidate cell 1 can be reduced by the base station, by not including the at least part of the first list that can be re-used for processing purposes related to the second list of beam indicators. According to one exemplary implementation, what can be re-used from the first list (i.e. correspondingly what can be omitted from the second list) is one or more complete beam indicators or a parameter or field within beam indicator(s).

The presented improved TCI state configuration procedure made reference to "beam indicators", "TCI States", parameters and fields, without providing many details on the content of such a beam indicator/TCI State. In one example implementation, the beam indicator may comprise one or more of:
- an identification of the beam indicator,
- an indication of a downlink reference signal transmitted in the mobility candidate cell via a beam, and
- a type of quasi co-location of the indicated downlink reference signal with another signal.

Correspondingly, the second list of beam indicators can be reduced by leaving out at least one complete beam indicator, by leaving out part of at least one beam indicator (e.g. leaving out the DL reference signal indication and/or the quasi co-location type), or by leaving out both complete beam indicator(s) and part of other beam indicator(s).

For an exemplary 3GPP-compliant implementation (see e.g. 3GPP TS 38.331 as presented above), the content of the Transmission Configuration Indication, TCI, State, is defined in the corresponding information elements *TCI-State, TCI-UL-State, CandidateTCI-State* and *CandidateTCI-UL-State.* Although different from each other, these 3GPP IEs have in common that at least the following parameters are included:
- a TCI State ID (see above identification of the beam indicator), and
- a referenceSignal (be it r18 or r17) (see above indication of downlink reference signal).

The *TCI-State* and *CandidateTCI-State* IEs may further include a qcl-type (also qcl-type- r18) (see above type of quasi co-location).

As assumed in the above implementation for Fig. 17, at some point in time there is a cell switch to candidate cell 1. According to a more detailed exemplary implementation, not explicitly illustrated in Fig. 17, it is further assumed that the UE and gNB both participate in a mobility procedure that allows the UE to switch between different cells of the gNB. In said respect, candidate cell 1, for which the UE has received the configuration information of beam indicators, is a possible target cell for a cell switch away from the current serving cell of the UE.

Further, according to one example, the mobility procedure can be a lower-layer mobility procedure that does not require higher-layer signaling when performing the cell switch from a source cell to a target cell. Higher-layer signaling may be used in advance to prepare the cell switch, but at the time of the cell switch no higher-layer signaling is necessary. Such a lower-layer mobility procedure may facilitate reducing the latency, overhead and interruption time for a serving-cell change.

For instance, the mobility procedure may include that the UE performs measurements on possible mobility candidate cells and transmits the results of such measurements to the gNB. On the basis of such measurements, the gNB can decide whether and when the UE shall perform a cell switch and to which cell. Accordingly, the gNB can transmit a suitable message, e.g. called mobility trigger indication, to the UE, indicating a target cell, e.g. the candidate cell 1, for the cell switch. In one example, the mobility trigger indication can be transmitted in a MAC CE.

In one exemplary 3GPP-compliant implementation, the above-mentioned lower-layer mobility can be the lower-layer-triggered mobility (LTM) according to the 3GPP telecommunication standards (e.g. Rel. 18 etc.) discussed above (see description for "Lower-layer-triggered mobility (LTM)", Fig. 9). Such an exemplary 3GPP-compliant implementation of the improved TCI state configuration procedure might re-use the definitions provided therein, comprising among other things e.g. the defined information elements for configuring the cell switch in advance.

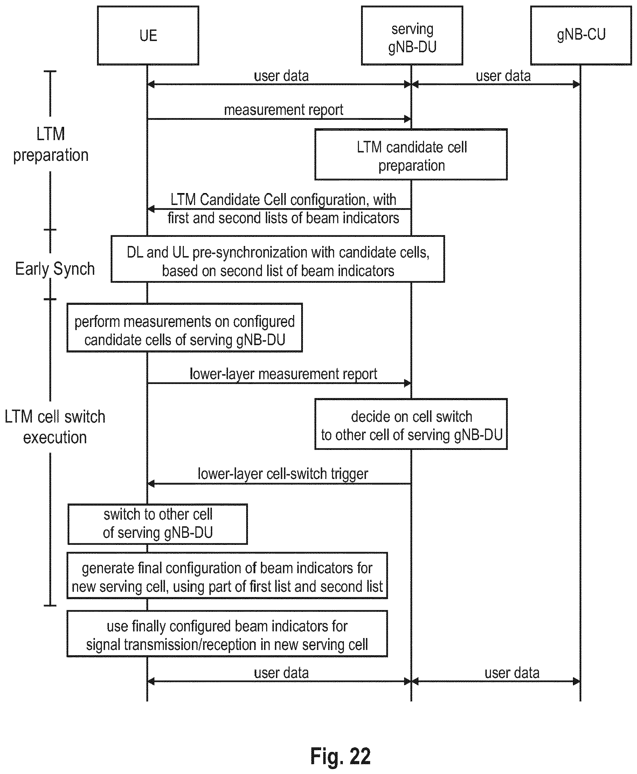

**Fig. 22** illustrates a simplified and exemplary message exchange for an intra-DU lower-layer cell switch incorporating the improved TCI State configuration procedure described herein. Fig. 22 is based on the intra-DU lower-layer cell switch according to the ongoing 3GPP Rel. 18 work as explained in Fig. 9 before and extends it with the additional steps for the improved TCI State configuration. To simplify the subsequent explanation, the explanations for Fig. 9 are assumed unless replaced by the following explanation. Thus, as apparent from Fig. 22, the gNB-DU serving the UE prepares and then transmits the appropriate LTM candidate cell configurations to the UE, which may include the inside and outside lists of TCI States. For the early synchronization (Early Synch in Fig. 22) before the cell switch, the UE performs a DL and UL pre-synchronization with the LTM candidates based on the outside list of beam indicators.

The cell switch execution is as described already for Fig. 9. Fig. 22 illustrates that after the cell switch to the new serving cell, the UE generates the final configuration of beam indicators and then uses the finally configured beam indicators for signal transmission and/or signal reception in the new serving cell (see also Fig. 17 details regarding these two steps).

Note that in Fig.22, it is illustrated that the generating final configuration of beam indicators for new serving cell is part of the LTM cell switch execution. Alternatively, this generating step can be performed after LTM cell switch execution. In such case, the initial communication between UE and the new serving cell during the LTM cell switch execution phase can be based on either first list or second list. As long as both the UE and the new serving cell have the same understanding of which TCI state(s) to use, there would not be beam misalignment between the UE and the new serving cell.

Still further exemplary implementations of the improved TCI State configuration procedure (according to any one of the other presented implementations) concern how the first and second lists of beam indicators are provided to the UE. In Fig. 17 it was described that configuration information for candidate cell 1 is transmitted from the gNB to the UE. In one example implementation, the second list is part of a cell configuration of the mobility candidate cell. In general, the cell configuration may be understood as comprising parameters that are usable by the UE for communicating with said mobility candidate cell after the mobility cell switch from a source cell to said mobility candidate cell. The cell configuration of the mobility candidate cell is thus only then actually necessary when the UE actually connects to said mobility candidate cell. According to one example, and in order to reduce processing, before the mobility cell switch to a mobility candidate cell, the UE does not process the second list of beam indicators of said mobility candidate cell inside the cell configuration. Therefore, before the cell switch, the UE would not be aware of the second list of beam indicators and its content.

On the other hand, in one example, the first list of beam indicators may not be transmitted as part of the cell configuration of the mobility candidate cell. The first list of beam indicators could be transmitted together with - but outside of - the cell configuration (including the second list of beam indicators), e.g. within the same configuration message (see "configuration information" in Fig. 17).

According to one exemplary 3GPP-compliant implementation of the improved TCI State configuration procedure, the configuration message could be the *LTM-Candidate* information element for adding or modifying a LTM Candidate configuration presented in the above section "3GPP Release 18 mobility enhancements". Accordingly, the field Itm-CandidateConfig-r18 inside the above IE *LTM-Candidate* would correspond to the cell configuration and may include the above noted second list of beam indicators (inside list). Further, the fields Itm-DL-OrJointTCI-StatetoAddModList-r18 and Itm-UL-TCI-StatesToAddModList-r18 (if present) of the *LTM-Candidate* IE are not within the cell configuration Itm-CandidateConfig-r18 and would correspond to the above noted first list (outside list) of beam indicators.

As presented above, e.g. in connection with Fig. 14 and 17, the UE generates a final configuration of beam indicators, based on both of the configured first and second lists of beam indicators received from the gNB. In the following, different variants of the improved TCI state configuration procedure are presented on how this generation of the final configuration can be achieved.

As an overview, according to a first variant, the content of the two lists of beam indicators are combined in units of beam indicators. According to a second variant, the content of the two lists of beam indicators are combined in units of beam indicator fields. According to a third variant, the first and second variants are performed together. More details on the three variants will be presented below.

### First Variant - list combining

According to this first variant of the improved TCI State configuration procedure, the use of the at least part of the first list of beam indicators and of the second list of beam indicators to generate the final configuration is such that the final configuration comprises all beam indicators from the first list and all beam indicators from the second list. In one example, the content of the two lists of beam indicators are thus combined in units of complete beam indicators.

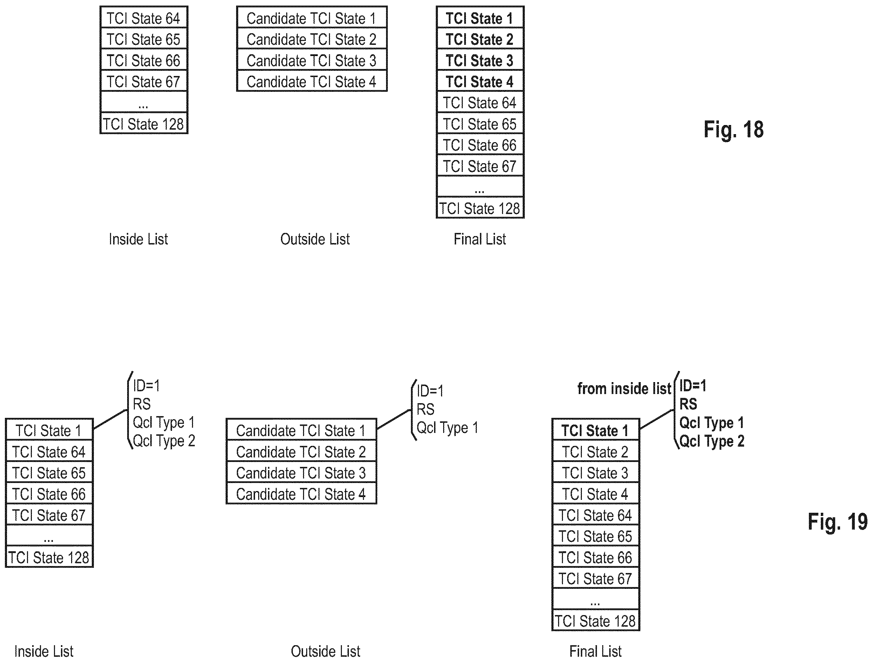

**Fig. 18** illustrates an exemplary implementation of the first variant, including an illustration of the inside list (second list) of beam indicators, the outside list (first list) of beam indicators, and the resulting final list (third list) of finally configured beam indicators. According to this first variant, the UE combines the first and second lists to obtain the final configuration, by incorporating all TCI States from the inside list and all (Candidate) TCI States from the outside list into the resulting final list. In other words, the inside list is extended with the TCI States from the outside list.

Correspondingly, in the present example, the resulting final list comprises all TCI States from the inside list (e.g. TCI States 64-128) and all TCI States from the outside list (e.g. Candidate TCI States 1-4).

As apparent, the inside list does not need to include the Candidate TCI States 1-4 that are already in the outside list and which can thus be re-used when creating the final list of TCI States. The corresponding signaling overhead, otherwise caused by the TCI States 1-4 in the inside list, can thus be reduced, and thus, redundancy can be eliminated.

It was assumed that the IDs of the inside list and outside list are not overlapping at all, i.e. are not the same. Put differently, in the inside list there is not a single TCI state with an ID that is also in the outside list (see Candidate TCI States). In the present example of Fig. 18, the TCI States with IDs 64-128 of the inside list do not exist in the outside list, which contains Candidate TCI States with IDs 1-4.

However, a sub-variant of the first variant concerns the case where the first and second lists comprise one or more same TCI States. For instance, a same TCI State is to be understood as having the same identification; a same TCI State does not need to be understood as meaning to include the same content.

This sub-variant is based on the first variant in that the non-overlapping Candidate TCI States of the outside list (e.g. those Candidate TCI States that are not present in the inside list) are incorporated into the final list, with all TCI States from the inside list.

In addition, according to this sub-variant, in case the inside list and outside lists comprise a same beam indicator, the final configuration is generated by the UE to comprise said same beam indicator from the inside list, not the one from the outside list. In other words, an overlapping beam indicator of the inside list takes precedence over the one of the outside list.

This sub-variant of the first variant will be explained exemplarily in connection with **Fig. 19**, which illustrates the inside list (second list) of beam indicators, the outside list (first list) of beam indicators, and the resulting final list (third list) of finally configured beam indicators. As apparent therefrom, the inside list and outside list have one overlapping TCI State with the same ID, namely (Candidate) TCI State 1. The two TCI States have the same ID=1, but different content, here e.g. the inside list TCI State additionally indicating QCL Type 2.

According to this sub-variant, the final list is generated to comprise the non-overlapping TCI States 2, 3, and 4 from the outside list. Furthermore, for the overlapping TCI State ID = 1, the final list will comprise the TCI State 1 from the inside list, including all the content from the TCI State 1 of the inside list, here e.g. ID=1, RS, QCLType 1 and QCL Type 2.

One advantage of the first sub-variant is that the TCI States of the inside list had been originally configured by the base station for use at the UE after the cell switch. Thus, the TCI State content of the inside list should be more appropriate to be used by the UEafter the cell switch.

### Second Variant - field combining

According to the second variant, the use of the at least part of the first list of beam indicators and of the second list of beam indicators to generate the final configuration is such that in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list. In one example, the content of the two lists are thus combined in units of beam indicator fields, as will be explained below.

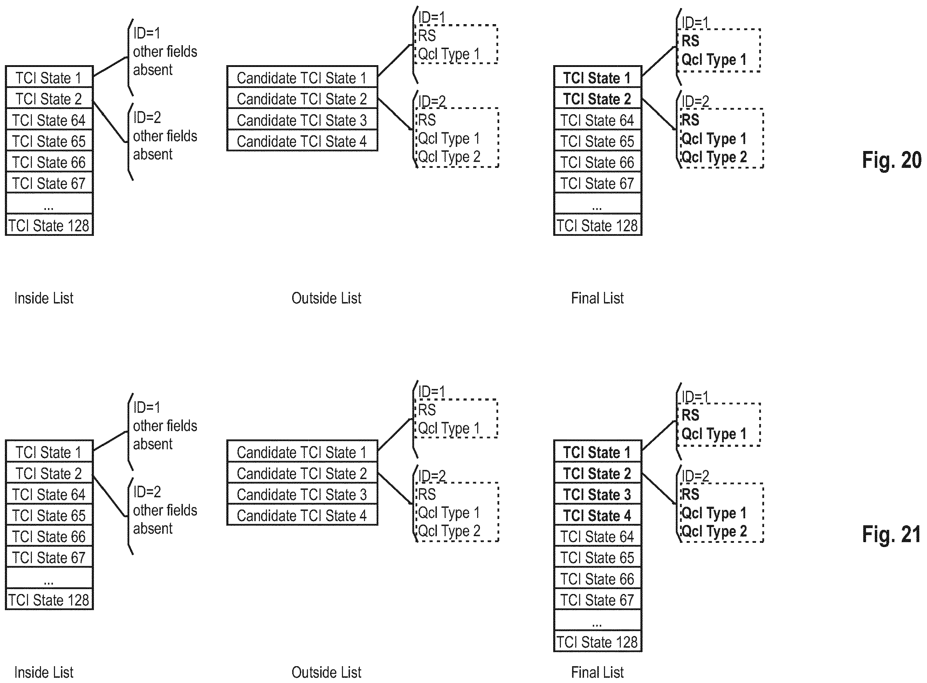

**Fig. 20** illustrates an exemplary implementation of the second variant, including an illustration of the inside list (second list) of beam indicators, the outside list (first list) of beam indicators, and the resulting final list (third list) of finally configured beam indicators. According to this second variant, the UE combines the first and second lists to obtain the final configuration, by incorporating fields from a TCI State of the outside list into a corresponding overlapping TCI State (e.g. with same ID) of the inside list.

In the present example of Fig. 20, it is assumed that there are two overlapping (Candidate) TCI States with the IDs =1 and ID = 2 respectively in the inside list and outside list. Except for the ID, the other fields of the TCI State 1 and TCI State 2 are missing from the inside list but exist in the outside list, here e.g. the three fields RS, QCL Type 1, QCL Type 2. The TCI States 1 and 2 of the inside list are thus incomplete.

Correspondingly, the content of the inside list can be significantly reduced, thus resulting in less configuration information to be transmitted to the UE.

Since there are field(s) absent in the overlapping TCI States 1 and 2 in the inside list, the UE, when generating the final list, incorporates the TCI State fields of the outside list that are absent in the TCI State of the inside list into the corresponding TCI State of the final list. In the present example, for TCI State 1, the Candidate TCI State 1 of the outside list additionally comprises the fields RS and QCL Type 1. Thus, the final list is generated by the UE to include for TCI State 1, the !D=1 (same in the TCI States of inside and outside list) as well as the absent fields RS and QCL Type 1 from the outside list. Similarly, for TCI State 2, the Candidate TCI State 2 of the outside list additionally comprises the fields RS, QCL Type 1 and QCL Type 2. Thus, the final list is generated by the UE to include for TCI State 2, the ID=2 (same in the TCI States of inside and outside list) as well as the absent fields RS, QCL Type 1 and QCL Type 2 from the outside list.

It should be noted that compared to the first variant, other Candidate TCI States of the outside list that do not exist in the inside list (here e.g. Candidate TCI States with ID=3 and ID=4) are not incorporated into the final list. The final list thus comprises all TCI States of the inside list, further wherein any absent TCI state field of the inside list is replaced with the corresponding TCI State field of the outside list (if existent). Correspondingly, the second variant focuses on the overlapping TCI States (here with !D=1 and ID=2) and provides a field-replacing mechanism.

According to a further exemplarily implementation of the second variant, a new TCI State configuration is provided. In particular, the configuration information for configuring the second list of beam indicators is such that parameters of each beam indicator are not mandatorily configured except for an identification parameter of the beam indicator. By not requiring a parameter (field) mandatorily, it is facilitated that the corresponding TCI States (of the inside list) can be reduced, to allow reducing signaling and redundancy.

For this second variant, the UE determines whether and which fields of a TCI State of the inside list are absent. In one example, the UE is aware of the configurable fields of a TCI State and simply compares the configurable fields of such a TCI State with the actually present fields of a configured TCI State, to identify absent fields. Furthermore, it is agreed that a non-mandatory parameter of a beam indicator of the second list is associated with a rule, which indicates that in the absence of said non-mandatory parameter, the UE can apply a corresponding parameter of the first list, if existing.

This implementation can also be applied exemplarily in a 3GPP compliant manner. In particular, the existing information elements in the 3GPP standards for configuring the TCI states (see *TCI-State* IE and *TCI-UL-State* IE of above section "Configuration of TCI states (TCI Configuration) ") have a mix of optional and mandatory fields, e.g. tci-StatelD and qcl-Type1 being mandatory, and the remaining fields (e.g. qcl-Type, additionaIPCI-r17) being optional.

Furthermore, in those existing *TCI-State* IE and *TCI-UL-State* IEs, some fields that are absent are associated with the "Need R" code, which is defined as follows in the Table 6.1.2-1 of TS 38.331 (e.g. v17.6.0):

**Table 6.1.2-1: Meaning of abbreviations used to specify the need for fields to be present**

| **Abbreviation** | **Meaning** |
|---|---|
| ....... | ...... |
| Need R | *Release* |
| | Used for (configuration) fields that are stored by the UE i.e. not one-shot. Upon receiving a message with the field absent, the UE releases the current value. |

As apparent therefrom, for an absent field with code "Need R", the UE is supposed to release the current value. This is however not an intended behaviour for the second variant.

The current lEs for defining TCI States are thus not optimal, and rather new lEs can be provided that take into account the concept of the second variant of the improved TCI State configuration procedure.

In particular, the fields of the newTCI-State lEs should all be optional (one possibly and exemplary exception is the ID field, which facilitates identifying the overlapping TCI States between the inside and outside lists). One example of a new information element for defining a DL or joint TCI State is the following IE named *TCI-State-r18:*

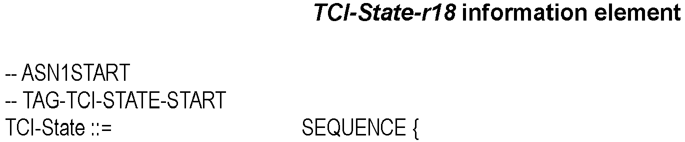

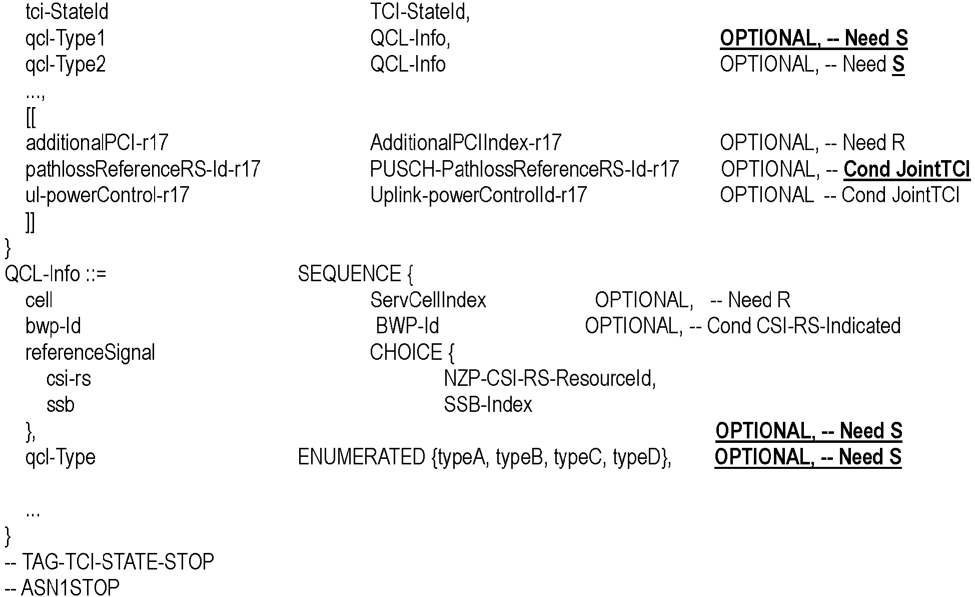

The differences to the *TCI-State* IE of the prior art are marked in bold and underlined, in particular making the qcl-Type1 optional (rather than mandatory), associating qcl-Type1 and qcl-Type2 with code "Need S". Need S is to be understood as a new code or rule according to which, if a field (here e.g. the qcl-Type1 and qcl-Type2 fields) is absent, the UE applies the stored value in the Candidate TCI State configuration(e.g. CandidateTCI-State) with the same TCI State ID.

A further difference is that the code for the field pathlossReferenceRS-ID-r17 is changed from Cond JointTCI1 (which requires the field to be mandatorily present) to Cond JointTCI (which allows the field to be optionally present).

Alternatively to the above presented TCI-State-r18 IE, all the fields (possibly except tci-Stateld) of the *TCI-State-r18* IE could be associated with the code "Need S" so as to be replaceable by a corresponding field of the *CandidateTCI-State* IE in the outside list. This would facilitate a further reduced TCI State in the inside list, thus allowing to further reduce the signaling.

A further detailed exemplary implementation takes into account the other fields of the *TCI-State* IE. For instance, the fields "cell" and "bwp-ld" within the QCL-Info of the TCI-State are optional. According to the field explanation in 3GPP TS 38.331, they are used to respectively indicate in which cell and bandwidth part (bwp) the reference signal (indicated by field "referenceSignal") is located. If the fields are not present, the referenceSignal is assumed to be located in the cell and bwp in which the TCI state is applied by the UE. Therefore, those two fields of the inside list are not needed to be replaced by the corresponding one from the outside list. They can be left absent in the inside list, e.g. if the reference signal indicated by the TCI state of the outside list is located in the same cell and same bwp as the TCI state of the inside list. Otherwise, these two fields can be explicitly indicated, as will become apparent from the following example 1.

Example 1: TCI State ID =1 is configured for cell 2 and BWP 1 from the inside list; candidate TCI state ID =1 is configured for cell 1 and BWP 1 from the outside list.

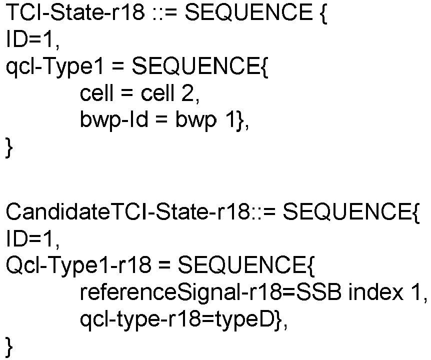

The final configuration of the concerned TCI state would then be:

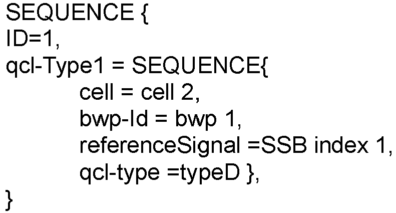

To facilitate the above implementation, the fields, referenceSignal and qcl-type, are made optional (and with code Need S) in the above *TCI-State-r18* IE (see above bold and underlined parts).

Still alternatively to the above, according to a further exemplary implementation, a new IE for the Candidate TCI states could be provided. This new IE *CandidateTCI-State*-r18-v2 may contain more fields from the TCI-State IE than the currently envisioned *CandidateTCI-State-r18* IE or even all fields from the current *TCI-State* IE, such as one or more from the fields: cell, bwp-ld-r17, additionaIPCI-r17, ul-powerControl-r17. Such a new IE *CandidateTCI-r18-v2* would allow a full replacement of all fields of the TCI-State UE.

In addition, one example of a new information element for defining an UL TCI State is the following IE named *TCI-UL-State-r18:*

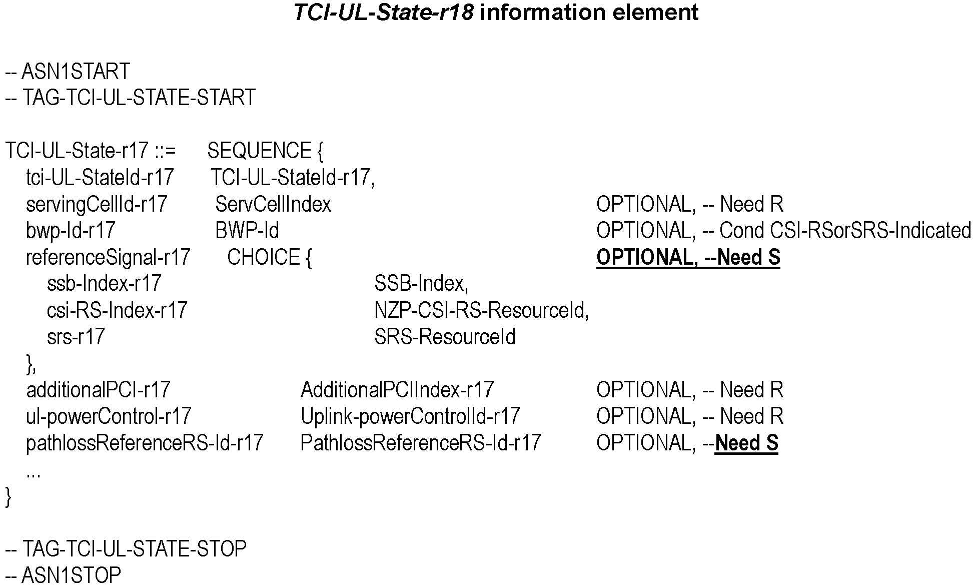

The differences to the TCI-UL-State IE of the prior art are marked in bold and underlined, in particular making the reference signal field referenceSignal-r17 optional, and associating both the fields referenceSignal-r17 and pathlossReferenceRS-ld-r17 with the code "Need S". As already mentioned before, Need S is to be understood as a new code or rule according to which, if a field (here e.g. the referenceSignal-r17 and pathlossReferenceRS-ld-r17 fields) is absent, the UE applies the stored value in the Candidate TCI UL State configuration (e.g. CandidateTCI-UL-State) with the same TCI State ID.

The field pathlossReferenceRS-ID-r17 is typically used for calculating the path loss for an UL transmission such as for PUSCH, PUCCH and SRS, such that it may indeed prove useful for a TCI State of the uplink. On the other hand, for the new DL-related IE *TCI-State-r18* introduced above, the associated code for pathlossReferenceRS-ld-r17 is Cond JointTCI to make the field optional but not necessarily to be replaced by a corresponding field of the same TCI State of the outside list.

Alternatively to the above presented *TCI-UL-State-r18* IE, all the fields (except tci-Stateld) of the *TCI-UL-State-r18* IE could be associated with the code "Need S" so as to be replaceable by a corresponding field of the *CandidateTCl-UL-State* IE in the outside list. This would facilitate a further reduced TCI UL State in the inside list, thus allowing to further reduce the signaling.

A further detailed exemplary implementation takes into account the other fields of the TCI-UL-State IE. As similarly discussed for the *TCI-State* IE and *CandidateTCI-State* IE, the fields servingCellld-r18 and bwp-ld-r17 of the TCI-UL-State-r18 IE are not in the currently envisioned *Candidate TCI-UL-State* IE. For instance, if the fields are not present, the referenceSignal is assumed to be located in the cell and bwp in which the TCI UL State is applied by the UE. Therefore, those two fields of the inside list are not needed to be replaced by the corresponding one from the outside list. They can be left absent in the inside list, e.g. if the reference signal indicated by the TCI UL state of the outside list is located in the same cell and same bwp as the TCI UL state of the inside list. Otherwise, these two fields can be explicitly indicated.

Still alternatively to the above, according to a further exemplary implementation, a new IE for the Candidate TCI UL states could be provided. This new IE *CandidateTCI-UL-State-*r18-v2 may contain more fields from the *TCI-UL-State* IE than the currently envisioned *CandidateTCI-UL-State-r18* IE or even all fields from the current *TCI-UL-State* IE, such as one or more from the fields: servingCellld-r17, bwp-ld-r17, additionaIPCI-r17, ul-powerControl-17, pathlossReferenceRS-ld-r17.

### Third Variant - List and field combining

The third variant involves a combination of the first and second variants (and the respective sub-variants and implementations) described above. Thus, according to the third variant, the UE, when generating the final configuration of beam indicators, incorporates all beam indicators from the first list and all beam indicators from the second list (see above first variant). In addition, the third variant also allows to handle a case where the first and second lists comprise a same beam indicator, e.g. same ID.

In such an overlapping beam indicator case, there are two processing options of the improved TCI State configuration procedure. According to one option, the UE generates the final configuration to comprise said overlapping beam indicator from the inside list (rather than the one from the outside list), according to the sub-variant of the first variant (for details see above description of sub-variant of first variant).

A second option is applicable if the UE determines that a field is absent in a beam indicator of the inside list. The UE generates the final configuration by completing absent fields of a beam indicator in the inside list with corresponding fields of the same beam indicator of the outside list according to the second variant (for details see above description of second variant). In said case, the beam indicator of the inside list does not take precedence over the same beam indicator of the outside list, which rather replaces one or more absent fields of the inside list.

**Fig. 21** illustrates an exemplary implementation of the third variant, including an illustration of the inside list (second list) of beam indicators, the outside list (first list) of beam indicators, and the resulting final list (third list) of finally configured beam indicators. Fig. 21 is quite similar to Fig. 20, particularly regarding the inside list and outside list. According to this third variant, however, the final list not only contains the TCI States 1 and 2 (completed based on the outside list, following the second variant; see description above for Fig. 20), but also contains the TCI States 3 and 4 from the outside list (following the first variant).

The third variant thus combines the first and second variants, allowing flexibility on how to define the inside and outside lists and facilitating reducing the content of the inside list and thus the necessary signaling for configuring the UE.

### Further implementations

In the above, different variants and implementations of the improved TCI State configuration procedure were described. In further exemplary implementations of the improved TCI State configuration procedure (according to any one of the other presented implementations), the UE performs one or more other subsequent procedures on the basis of the thus generated final configuration of TCI States.

One such exemplary subsequent procedure relates to the activation of a sub-set of beam indicators and the subsequent indication of one or a pair of beam indicators among the activated sub-set. For example, the UE activates a subset of beam indicators among the final configuration of beam indicators. In one example, the activating of the subset of beam indicators is performed based on an activation message from a base station of the mobility candidate cell after the mobility cell switch. Further subsequently, the UE receives a downlink control message from the base station, which indicates one beam indicator or a pair of beam indicators, out of the activated subset of beam indicators. The UE then uses the indicated one or pair of beam indicators for the signal transmission respectively signal reception. In one example, the one beam indicator can be a joint TCI State to be used by the UE for both receiving downlink signals and transmitting uplink signals. When assuming that separate UL and DLTCI States have been configured, two beam indicators can be activated, separately one DL TCI State and one UL TCI State.

In one option, the downlink control message for indicating the one or pair beam indicators among the activated sub-set may further schedule a downlink signal, wherein the UE may then use the indicated (DL) TCI State to receive said scheduled downlink signal.

In an exemplary 3GPP-compliant implementation of the improved TCI State configuration procedure, the activation of a sub-set of beam indicators and the subsequent indication of one or a pair of beam indicators can be performed according to the definitions of the current or future 3GPP telecommunications standards, such as explained in the above sections "Activation of TCI states (TCI Activation)" and "Indication of TCI states (TCI Indication)" (see e.g. TS 38.321).

Another such subsequent exemplary procedure is beam management. The beam management is performed by the UE when located at the new mobility candidate cell based on the finally configured beam indicators for said new cell. In one example, beam management comprises one or more of the following:
- initial beam establishment,
- beam adjustment, and
- beam failure recovery.

In the different implementations and variants of the improved TCI State configuration procedure, it was explained that second list of beam indicators (see inside list) can be used by the UE after the cell switch for signal reception and signal transmission. For example, the UE uses the inside list of beam indicators for receiving a user data signal, such as a PDSCH or receiving a control signal such as a PDCCH, and the UE uses the inside list of beam indicators for transmitting a user data signal, such as a PUSCH, or transmitting a control signal such as a PUCCH.

The above mentioned signal reception and/or signal transmission based on the finally configured beam indicators can be e.g. part of the beam management.

In the different implementations and variants of the improved TCI State configuration procedure, it was explained that first list of beam indicators (see outside list) can be used by the UE before the cell switch for pre-processing of signals from the respective mobility candidate cell. For example, the pre-processing may comprise the reception of a reference signal (such as SSB, CSI-RS) that belongs to the mobility candidate cell while the UE is still connected to its current serving cell. Such pre-processing for example does not necessarily include the processing of user data signals from the mobility candidate cell (just the reference signals), because one purpose of such a pre-processing is to establish an early (frequency/time) tracking of a beam of the mobility candidate cell (related said reference signal) and to thus reduce the beam switching time when the actual cell switch is performed.

According to a further exemplary implementation of the improved TCI State configuration procedure, the UE is enabled to transmit a request to the base station of its serving cell, requesting how to generate a final configuration of beam indicators. In more detail, several different implementations and variants (see e.g. first to third variants) are described herein for the improved TCI State configuration procedure. According to one example of this further implementation, the UE can transmit an indication to its serving base station, which indicates one or more of these different implementations and variants that the UE preferentially wants to execute for generating the final configuration of beam indicators. For instance, the UE may indicate one of the first, second or third variants as the preferred way of generating the final configuration. The base station receives this indication and can take the indicated preferred way into account when deciding how to generate the first and second lists of beam indicators.

As an alternative, instead of directly indicating how to generate the final configuration, the UE may transmit a capability indication to the base station. In more detail, the different implementations and variants may differ from one another, e.g. with respect to the necessary processing to generate the final configuration. For instance, the list combining of the first variant may require less processing than the field combining of the second variant, and the combined solution of the third variant could require more processing than the first and second variants. Correspondingly, the capability indication from the UE could provide the base station with the necessary information of how the UE should be configured. As one example, should the UE indicate a low processing capability, the base station could preferentially use the first variant for how to generate the first and second lists; should the UE indicate a high processing capability, the base station is more flexible and could also use the second or even the third variant for how to generate the first and second lists.

In any case, however, the UE is enabled to control or influence how the final configuration is to be generated, and thus also how the first and second lists of beam indicators are generated.

The improved TCI State configuration procedure also involves an improved base station behaviour, as already explained above with respect to Fig. 15, 16 and 17. In the following, exemplary implementations of the improved base station and base station processing for the improved TCI State configuration procedure will be explained.

With regard to Fig. 16 and 17 it was briefly explained that the base station transmits the configuration information for the candidate cell to the UE, including the first and second lists. Before the transmission, the base station is responsible for first generating the first and second lists and subsequently generating the configuration information with the generated first and second lists to be transmitted to the UE.

When generating the first and second lists of beam indicators, the base station can generate the second list such that it does not include at least part of the first list of beam indicators that will be re-used later by the UE when generating the final configuration of beam indicators. According to one exemplary implementation, what can be re-used from the first list (i.e. correspondingly what can be omitted by the base station from the second list) is one or more complete beam indicators or a parameter or field from within beam indicator(s).

The base station uses the at least part of the first list to generate the final configuration, wherein this final configuration is usable for signal transmission and/or signal reception in the new serving cell after the cell switch. One exemplary implementation of generating a final configuration is that the base station generates a third list with the finally configured beam indicators.

As already presented above for the UE processing, the content of the two lists of beam indicators can be used to generate the final configuration of beam indicators. Three different variants (and sub-variants) have been explained (see Fig. 18, 19, 20, 21) on how the two lists of beam indicators can be combined to achieve the generation of the final configuration. Furthermore, the base station also generates a final configuration of beam indicators following the same principles as the UE and thus generates the same final configuration of beam indicators as the UE side. For instance, the base station can use the finally configured beam indicators for beam management.

The base station can first determine how to generate the first and second lists, e.g. according to one of the discussed first, second and third variants. Then, the base station follows the determined way to generate the first and second lists of beam indicators and thus configures the UE with mobility candidate cell(s).

In brief, according to the first variant applied by the base station, the use of the at least part of the first list of beam indicators and of the second list of beam indicators to generate the final configuration is such that the final configuration comprises all beam indicators from the first list and all beam indicators from the second list. In one example, the content of the two lists of beam indicators are thus combined in units of complete beam indicators. The further details on implementations and variants are already explained above and apply correspondingly to the base station side generation of the final configuration. For instance, according to the sub-variant explained with reference to Fig. 19, in case the inside list and outside lists comprise a same beam indicator, the final configuration is generated by the base station to comprise said same beam indicator from the inside list, not the one from the outside list. In other words, an overlapping beam indicator of the inside list takes precedence over the one of the outside list. A repetition of further explanations is thus omitted, and reference is made instead to the details provided above.

According to the second variant applied by the base station, the use of the at least part of the first list of beam indicators and of the second list of beam indicators to generate the final configuration is such that in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list. In one example, the content of the two lists are thus combined in units of beam indicator fields. The further details on implementations and variants are already explained above and apply correspondingly to the base station side generation of the final configuration. A repetition of further explanations is thus omitted, and reference is made instead to the details provided above.

As explained above for the second variant, in one example, the base station can also be capable of generating new TCI-State IEs taking into account the concept of the second variant of the improved TCI State configuration procedure. For instance, the base station can generate the first and second lists such that parameters of each beam indicator are not mandatorily configured (one possibly and exemplary exception is the ID field, which facilitates identifying the overlapping TCI States between the inside and outside lists). Furthermore, these non-mandatory parameters can be associated with a rule, according to which in the absence of said non-mandatory parameter, the base station can apply a corresponding parameter of the first list, if existing. The corresponding new IEs *TCI-State-r18* and *TCI-UL-State-r18* that can be generated by the base station are already presented above.

According to the third variant applied by the base station, the base station, when generating the final configuration of beam indicators, incorporates all beam indicators from the first list and all beam indicators from the second list (see first variant). In addition, the third variant also allows to handle a case where the first and second lists comprise a same beam indicator (e.g. same ID), e.g. the base station generates the final configuration by completing absent fields of a beam indicator in the inside list with corresponding fields of the same beam indicator of the outside list according to the second variant (for details see above description of second variant). The further details on implementations and variants are already explained above and apply correspondingly to the base station side generation of the final configuration. A repetition of further explanations is thus omitted, and reference is made instead to the details provided above.

According to a further exemplary implementation of the base station, the base station is capable of processing a request from the UE, requesting how the UE prefers to generate the final configuration of beam indicators. In response to such a request or capability indication, the base station then determines how to generate the first and second lists based on the received request/capability indication. Details on the request and capability indication have already been provided above with respect to the UE behaviour and need not be repeated here. Thus, for instance, the request may indicate one of the first, second or third variants as the preferred way of generating the final configuration, or the capability indication may indicate a low or high processing capability of the UE.

A further implementation of the improved TCI State configuration procedure relates to improving the preparation of the configuration information, particularly improving how to obtain the configuration information of candidate cells from another base station. In particular, it is exemplarily assumed that one or a plurality of base stations are involved in mobility for a UE; one base station may control a plurality of cells. The serving base station will thus be responsible to provide configuration information for one or more mobility candidate cells to the UE, while other base stations of mobility candidate cells might assist by providing a mobility configuration for a mobility candidate cell to the UE's serving base station (to be further forwarded to the UE).

The configuration information of each of a plurality of mobility candidate cells is exchanged between base stations, and also includes the first and second lists of beam indicators as assumed for the configuration transmitted from the base station to the UE. Following similar principles as for improving the configuration between the base station and the UE, the configuration information exchanged between the base stations, more particularly the second list therein, can be reduced by not including at least that part of the first list of beam indicators that can be later re-used by the UE (and base station) when generating the final configuration.

In one example, one base station BS1 receives a request from another base station BS2, wherein this request requests the configuration information for one cell 1 operated by the base station BS1 that is a candidate cell for mobility of a UE1 served by the other base station BS2. The BS1 then prepares and transmits suitable configuration information for its candidate cell 1 to the other base station BS2. This configuration information on the BS1's candidate cell 1 respectively includes two lists of beam indicators, the first list of beam indicators being usable by the UE1 for pre-processing of signals from BS1's candidate cell 1 before a mobility cell switch of UE1 to cell 1. The other second list of beam indicators of said configuration information is usable by the UE1 for signal transmission and/or signal reception when UE1 is connected to cell 1 after the cell switch of UE1 to cell 1. At least a part of the first list of beam indicators is also usable by UE1 (together with second list of beam indicators) for signal transmission and/or signal reception when UE1 is connected to cell 1 after the cell switch of UE1 to cell 1.

Furthermore, since at least part of the first list can be re-used for second-list-related processing purposes, the second list can be reduced by not including said re-used part. According to one exemplary implementation, what can be re-used from the first list (i.e. correspondingly what can be omitted by the base station from the second list) is one or more complete beam indicators or a parameter from within a beam indicator. Consequently, configuration signaling over the interface between base stations can be reduced too.

As already explained in detail above for the UE and base station behaviour, three different variants (and sub-variants) are possible (see Fig. 18, 19, 20, 21) on how the two lists of beam indicators can be combined to achieve the generation of the final configuration. Depending on the variant, the two lists of beam indicators can be generated differently. This equally applies to the just discussed generation of first and second lists of beam indicators by BS1 in response to a request from BS2. Consequently, the BS1 may generate the first and second lists of beam indicators based on the principle of one of the above discussed first, second and third variants.

According to a further example, it is assumed that one gNB has a DU-CU split architecture (one gNB has one central unit and one or more distributed units) (see also description referring to Fig. 6 above). Correspondingly, the above BS2 can be the gNB-CU, which requests from the gNB-DU (as the above BS1) configuration information on a candidate cell of the gNB-DU. As explained above, since the second list, transmitted from the gNB-DU to the gNB-CU, can be reduced, the signaling on the F1AP interface between the gNB-CU and gNB-DU can be reduced too, which reduces signaling overhead over said F1AP interface.

### Further Aspects

According to a first aspect, a UE is provided that includes the following. A receiver of the UE receives configuration information for each of at least one mobility candidate cell, the configuration information configuring:
- a first list of one or more beam indicators, the first list being usable by the UE for pre-processing of signals from the respective mobility candidate cell when located in a serving cell of the UE before a mobility cell switch to the respective mobility candidate cell,
- a second list of one or more beam indicators, the second list being usable by the UE for one or more of signal transmission and signal reception when located in the respective mobility candidate cell after a mobility cell switch.

At least a part of the first list of beam indicators is also usable by the UE for one or more of the signal transmission and the signal reception when located in the respective mobility candidate cell after the mobility cell switch.

According to a second aspect provided in addition to the first aspect, wherein processing circuitry of the UE uses the at least part of the first list of beam indicators to generate a final configuration of beam indicators that is usable by the UE for the one or more of the signal transmission and signal reception when located in the respective mobility candidate cell after the mobility cell switch. In an optional implementation, the generating of the final configuration comprises generating a third list with the finally configured beam indicators.

According to a third aspect provided in addition to the first or second aspect, the second list of beam indicators does not comprise the at least part of the first list of beam indicators. In an optional implementation, the at least part of the first list of beam indicators is one or more of
- one or more complete beam indicators from among the first list of beam indicators, and
- a parameter of a beam indicator.

According to a fourth aspect, provided in addition to any one of the second to third aspects, the use of the at least part of the first list of beam indicators and of the second list of beam indicators to generate the final configuration is such that the final configuration comprises all beam indicators from the first list and all beam indicators from the second list.

According to a fifth aspect, provided in addition to the fourth aspect, the use of the at least part of the first list of beam indicators and of the second list of beam indicators to generate the final configuration is such that
- in case the first and second lists comprise a same beam indicator, the final configuration comprises said same beam indicator from the second list and does not comprise said same beam indicator from the first list.

In an optional implementation of the fifth aspect, same beam indicators are identified as being the same when having a same identification.

According to a sixth aspect, provided in addition to any one of the second to fifth aspects, the use of the at least part of the first list of beam indicators and of the second list of beam indicators to generate the final configuration is such that
- in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list.

In an optional implementation of the sixth aspect, same beam indicators are identified as being the same when having a same identification

According to a seventh aspect, provided in addition to any one of the first to sixth aspects, the configuration information for configuring the second list of beam indicators is such that parameters of each beam indicator are not mandatorily configured except for an identification parameter of the beam indicator. In an optional implementation, a non-mandatory parameter of a beam indicator of the second list is associated with a rule, which indicates that in the absence of said non-mandatory parameter, the UE can apply a corresponding parameter of the first list, if existing.

According to an eighth aspect, provided in addition to any one of the first to seventh aspects, a transmitter of the UE transmits a request to a base station of the serving cell of the UE, requesting how to generate a final configuration of beam indicators based on the first and second list of beam indicators. In an optional implementation, the request includes a capability indication.

According to a ninth aspect, provided in addition to any one of the first to eighth aspects, the signal transmission and the signal reception using the second list or the finally configured beam indicators comprise transmission respectively reception of a user data signal or control signal. In an optional implementation, the user data signal is a signal of a Physical Downlink Shared Channel, PDSCH, or a Physical Uplink Shared Channel, PUSCH, and wherein the control signal is a signal of a Physical Downlink Control Channel, PDCCH or a Physical Uplink Control Channel, PUCCH. In a further optional implementation, the pre-processing of signals using the first list comprises the signal reception of a reference signal and does not comprise the signal reception of a user data signal; further optionally, the reference signal is a Synchronization Signal Block, SSB, or a Channel State Information Reference Signal, CSI-RS.

According to a tenth aspect, provided in addition to any one of the second to ninth aspects, the processing circuitry activates a subset of beam indicators among a final configuration of beam indicators. Optionally, the activating of the subset of beam indicators is performed based on an activation message from a base station of the mobility candidate cell after the mobility cell switch. In an optional implementation, the receiver receives a downlink control message from the base station, wherein the downlink control message indicates one beam indicator or a pair of beam indicators, out of the activated subset of beam indicators to be used for the signal transmission respectively signal reception. In a further optional implementation, the downlink control message schedules a downlink signal.

According to an eleventh aspect, provided in addition to any one of the second to tenth aspects, the processing circuitry of the UE performs beam management on the finally configured beam indicators when the UE is located in the mobility candidate cell after the mobility cell switch. In an optional implementation, the beam management comprises one or more of:
- initial beam establishment,
- beam adjustment, and
- beam failure recovery.

According to a twelfth aspect, provided in addition to any one of the first to eleventh aspects, the at least one mobility candidate cell is a candidate cell available in a mobility procedure for the UE, which involves a mobility cell switch from a serving cell to a target mobility candidate cell. In an optional implementation, the mobility procedure for the UE is a lower-layer mobility not requiring higher-layer signaling when performing the mobility cell switch from the serving cell to the target mobility candidate cell.

In a further aspect, the receiver receives a mobility trigger indication, indicating one out of the configured at least one mobility candidate cell as a target of the mobility cell switch. Optionally the mobility trigger indication is a medium access control, MAC, Control Element.

According to a thirteenth aspect, provided in addition to any one of the first to twelfth aspects, the second list is part of a cell configuration of the mobility candidate cell. The cell configuration comprises parameters that are usable by the UE for communicating with said mobility candidate cell after the mobility cell switch from a source cell to said mobility candidate cell. In an optional implementation, the first list is not part of the cell configuration of the mobility candidate cell. In a further optional implementation, before the mobility cell switch to a mobility candidate cell, the processing circuitry does not process the second list of beam indicators of said mobility candidate cell inside the cell configuration.

According to a fourteenth aspect, provided in addition to any one of the first to thirteenth aspects, the beam indicator is one of
- a downlink beam indicator usable for a downlink signal,
- an uplink beam indicator usable for an uplink signal, and
- a joint beam indicator usable for both an uplink signal and a downlink signal.

In an optional implementation, each of the beam indicators in the first and second list comprises one or more of:
- an identification of the beam indicator,
- an indication of a downlink reference signal transmitted in the mobility candidate cell via a beam, and
- a type of quasi co-location of the indicated downlink reference signal with another signal.

In a further optional implementation, the beam indicator can be a Transmission Configuration Indication, TCI, State according to a 3GPP telecommunication standard, such as TS 38.331.

According to a fifteenth aspect, a base station is provided comprising the following. A transmitter of the base station transmits, to a user equipment, UE, configuration information for each of at least one mobility candidate cell, the configuration information configuring:
- a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
- a second list of one or more beam indicators , the second list being usable by the UE for one or more of signal transmission and signal reception when located in the respective mobility candidate cell after a mobility cell switch of the UE.

At least a part of the first list of beam indicators is also usable by the UE for one or more of the signal transmission and signal reception when located in the respective mobility candidate cell after the mobility cell switch of the UE
According to a sixteenth aspect, provided in addition to the fifteenth aspect, a processing circuitry of the base station generates the first and second lists of beam indicators and generates the configuration information to comprise the generated first and second lists of beam indicators. In an optional implementation, the generating of the first and second lists of beam indicators is such that the second list of beam indicators does not comprise the at least part of the first list of beam indicators. Further optionally, the at least part of the first list of beam indicators is one or more of
- one or more complete beam indicators from among the first list of beam indicators, and
- a parameter of a beam indicator

According to a seventeenth aspect, provided in addition to the sixteenth aspect, the generating of the first and second lists of beam indicators is such that parameters of each beam indicator are not mandatorily configured except for an identification parameter of the beam indicator. In an optional implementation, the processing circuitry marks a non-mandatory parameter of a beam indicator as being associated with a rule, which indicates that in the absence of said non-mandatory parameter, the UE base station can apply a corresponding parameter of the first list, if existing.

According to an eighteenth aspect, provided in addition to any one of the fifteenth to seventeenth aspects, processing circuitry of the base station uses the at least part of the first list of beam indicators to generate a final configuration of beam indicators that is usable by the UE for the one or more of the signal transmission and signal reception when located in the respective mobility candidate cell after the mobility cell switch. In an optional implementation, the generating of the final configuration comprises generating a third list with the finally configured beam indicators.

According to a nineteenth aspect, provided in addition to the eighteenth aspect, the use of the at least part of the first list of beam indicators and of the second list of beam indicators to generate the final configuration is such that the final configuration comprises all beam indicators from the first list and all beam indicators from the second list

According to a 20^{th} aspect, provided in addition to the nineteenth aspect, the use of the at least part of the first list of beam indicators and of the second list of beam indicators to generate the final configuration is such that
- in case the first and second lists comprise a same beam indicator, the final configuration comprises said same beam indicator from the second list and does not comprise said same beam indicator from the first list.

In an optional implementation, same beam indicators are identified as being the same when having a same identification.

According to a 21^{st} aspect, provided in addition to any one of the eighteenth to 20^{th} aspects, the use of the at least part of the first list of beam indicators and of the second list of beam indicators to generate the final configuration is such that
- in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list.

In an optional implementation, same beam indicators are identified as being the same when having a same identification.

According to a 22^{nd} aspect, provided in addition to any one of the fifteenth to 21^{st} aspects, a receiver of the base station receives a request from the UE, requesting how to generate the first and second lists of beam indicators. Optionally, the request includes a capability indication of the UE. In an optional implementation, the processing circuitry determines how to generate the first and second lists based on the received request.

According to a 23^{rd} aspect, provided in addition to any one of the fifteenth to 22^{nd} aspects, a receiver of the base station receives a request from another base station. The request requests configuration information for a cell operated by the base station for participating in mobility with another UE that is connected to the other base station. The transmitter transmits a second configuration information of the cell of the base station to the other base station, the second configuration information configuring:
- a fourth list of one or more beam indicators, the fourth list being usable by the other UE for pre-processing of signals from the cell operated by the base station before a mobility cell switch of the other UE to the cell operated by the base station,
- a fifth list of one or more beam indicators, the fifth list being usable by the other UE for one or more of signal transmission and signal reception when located in the cell operated by the base station after the mobility cell switch.

At least a part of the fourth list of beam indicators is also usable by the UE for one or more of the signal transmission and the signal reception when located in the cell operated by the base station. In an optional implementation, the other base station is a central unit of a base station, BS-CU, and the base station is a distributed unit of the same base station, BS-DU.

According to a 24^{th} aspect, a method is provided comprising the following steps performed by a user equipment, UE:
receiving configuration information for each of at least one mobility candidate cell, the configuration information configuring:
- a first list of one or more beam indicators, the first list being usable by the UE for pre-processing of signals from the respective mobility candidate cell when located in a serving cell of the UE before a mobility cell switch to the respective mobility candidate cell,
- a second list of one or more beam indicators , the second list being usable by the UE for one or more of signal transmission and signal reception when located in the respective mobility candidate cell after a mobility cell switch.

At least a part of the first list of beam indicators is also usable by the UE for one or more of the signal transmission and the signal reception when located in the respective mobility candidate cell after the mobility cell switch.

According to a 25^{th} aspect, a method is provided comprising the following steps performed by a base station:
transmitting, to a user equipment, UE, configuration information for each of at least one mobility candidate cell, the configuration information configuring:
- a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
- a second list of one or more beam indicators , the second list being usable by the UE for one or more of signal transmission and signal reception when located in the respective mobility candidate cell after a mobility cell switch of the UE.

At least a part of the first list of beam indicators is also usable by the UE for one or more of the signal transmission and signal reception when located in the respective mobility candidate cell after the mobility cell switch of the UE

According to a 26^{th} aspect, an integrated circuit is provided which, in operation, controls a process of a user equipment, UE, the process comprising the following steps performed by the UE:
receiving configuration information for each of at least one mobility candidate cell, the configuration information configuring:
- a first list of one or more beam indicators, the first list being usable by the UE for pre-processing of signals from the respective mobility candidate cell when located in a serving cell of the UE before a mobility cell switch to the respective mobility candidate cell,
- a second list of one or more beam indicators , the second list being usable by the UE for one or more of signal transmission and signal reception when located in the respective mobility candidate cell after a mobility cell switch.

At least a part of the first list of beam indicators is also usable by the UE for one or more of the signal transmission and the signal reception when located in the respective mobility candidate cell after the mobility cell switch.

According to a 27^{th} aspect, an integrated circuit is provided which, in operation, controls a process of a base station, the process comprising the following steps performed by the base station:
transmitting, to a user equipment, UE, configuration information for each of at least one mobility candidate cell, the configuration information configuring:
- a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
- a second list of one or more beam indicators , the second list being usable by the UE for one or more of signal transmission and signal reception when located in the respective mobility candidate cell after a mobility cell switch of the UE.

At least a part of the first list of beam indicators is also usable by the UE for one or more of the signal transmission and signal reception when located in the respective mobility candidate cell after the mobility cell switch of the UE.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation receives configuration information for each of at least one mobility candidate cell, the configuration information configuring:
• a first list of one or more beam indicators, the first list being usable by the UE for pre-processing of signals from the respective mobility candidate cell when located in a serving cell of the UE before a mobility cell switch to the respective mobility candidate cell,
• a second list of one or more beam indicators , the second list being usable by the UE for one or more of signal transmission and signal reception when located in the respective mobility candidate cell after a mobility cell switch, and
wherein at least a part of the first list of beam indicators is also usable by the UE for one or more of the signal transmission and the signal reception when located in the respective mobility candidate cell after the mobility cell switch.

2. The UE according to claim 1, further comprising:
processing circuitry, which in operation uses the at least part of the first list of beam indicators to generate a final configuration of beam indicators that is usable by the UE for the one or more of the signal transmission and signal reception when located in the respective mobility candidate cell after the mobility cell switch,
optionally wherein the generating of the final configuration comprises generating a third list with the finally configured beam indicators.

3. The UE according to any one of claims 1 to 2, wherein the second list of beam indicators does not comprise the at least part of the first list of beam indicators,
optionally wherein the at least part of the first list of beam indicators is one or more of
• one or more complete beam indicators from among the first list of beam indicators, and
• a parameter of a beam indicator.

4. The UE according to any one of claims 2 to 3, wherein the use of the at least part of the first list of beam indicators and of the second list of beam indicators to generate the final configuration is such that
• the final configuration comprises all beam indicators from the first list and all beam indicators from the second list.

5. The UE according to claim 4, wherein the use of the at least part of the first list of beam indicators and of the second list of beam indicators to generate the final configuration is such that
• in case the first and second lists comprise a same beam indicator, the final configuration comprises said same beam indicator from the second list and does not comprise said same beam indicator from the first list, and
optionally wherein same beam indicators are identified as being the same when having a same identification.

6. The UE according to any one of claims 2 to 5, wherein the use of the at least part of the first list of beam indicators and of the second list of beam indicators to generate the final configuration is such that
• in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list,
optionally wherein same beam indicators are identified as being the same when having a same identification.

7. The UE according to any one of claims 1 to 6, wherein the configuration information for configuring the second list of beam indicators is such that parameters of each beam indicator are not mandatorily configured except for an identification parameter of the beam indicator,
optionally wherein a non-mandatory parameter of a beam indicator of the second list is associated with a rule, which indicates that in the absence of said non-mandatory parameter, the UE can apply a corresponding parameter of the first list, if existing.

8. The UE according to any one of claims 1 to 7, further comprising a transmitter, which in operation, transmits a request to a base station of the serving cell of the UE, requesting how to generate a final configuration of beam indicators based on the first and second list of beam indicators, and
optionally wherein the request includes a capability indication.

9. A base station comprising:
a transmitter, which in operation, transmits, to a user equipment, UE, configuration information for each of at least one mobility candidate cell, the configuration information configuring:
• a first list of one or more beam indicators, the first list being usable by the UE for pre-processing of signals from the respective mobility candidate cell when located in a serving cell of the UE controlled by the base station before a mobility cell switch of the UE to the respective mobility candidate cell,
• a second list of one or more beam indicators , the second list being usable by the UE for one or more of signal transmission and signal reception when located in the respective mobility candidate cell after a mobility cell switch of the UE, and
wherein at least a part of the first list of beam indicators is also usable by the UE for one or more of the signal transmission and signal reception when located in the respective mobility candidate cell after the mobility cell switch of the UE.

10. The base station according to claim 9, further comprising processing circuitry, which in operation generates the first and second lists of beam indicators and generates the configuration information to comprise the generated first and second lists of beam indicators,
optionally wherein the generating of the first and second lists of beam indicators is such that the second list of beam indicators does not comprise the at least part of the first list of beam indicators, optionally wherein the at least part of the first list of beam indicators is one or more of
• one or more complete beam indicators from among the first list of beam indicators, and
• a parameter of a beam indicator.

11. The base station according to any one of the claims 9 to 10, further comprising:
processing circuitry, which in operation uses the at least part of the first list of beam indicators to generate a final configuration of beam indicators that is usable by the UE for the one or more of the signal transmission and signal reception when located in the respective mobility candidate cell after the mobility cell switch,
optionally wherein the generating of the final configuration comprises generating a third list with the finally configured beam indicators.

12. The base station according to claim 11, wherein the use of the at least part of the first list of beam indicators and of the second list of beam indicators to generate the final configuration is such that
the final configuration comprises all beam indicators from the first list and all beam indicators from the second list.

13. The base station according to claim 12, wherein the use of the at least part of the first list of beam indicators and of the second list of beam indicators to generate the final configuration is such that
• in case the first and second lists comprise a same beam indicator, the final configuration comprises said same beam indicator from the second list and does not comprise said same beam indicator from the first list, and
optionally wherein same beam indicators are identified as being the same when having a same identification.

14. The base station according to any one of claims 11 to 13, wherein the use of the at least part of the first list of beam indicators and of the second list of beam indicators to generate the final configuration is such that
• in case the first and second lists comprise a same beam indicator, and further in case said same beam indicator in the second list does not comprise a parameter that is comprised in said same beam indicator in the first list, said same beam indicator in the final configuration comprises said same beam indicator of the second list and the parameter from said same beam indicator of the first list,
optionally wherein same beam indicators are identified as being the same when having a same identification.

15. The base station according to any one of claims 9 to 14, wherein a receiver, in operation, receives a request from another base station, the request requesting configuration information for a cell operated by the base station for participating in mobility with another UE that is connected to the other base station,
wherein the transmitter in operation transmits a second configuration information of the cell of the base station to the other base station, the second configuration information configuring:
• a fourth list of one or more beam indicators, the fourth list being usable by the other UE for pre-processing of signals from the cell operated by the base station before a mobility cell switch of the other UE to the cell operated by the base station,
• a fifth list of one or more beam indicators, the fifth list being usable by the other UE for one or more of signal transmission and signal reception when located in the cell operated by the base station after the mobility cell switch, and
wherein at least a part of the fourth list of beam indicators is also usable by the UE for one or more of the signal transmission and the signal reception when located in the cell operated by the base station,
optionally wherein the other base station is a central unit of a base station, BS-CU, and the base station is a distributed unit of the same base station, BS-DU.
